(19) Europäisches Patentamt / European Patent Office / Office européen des brevets

(11) **EP 4 521 487 A1**

(12) **EUROPEAN PATENT APPLICATION**

(43) Date of publication:
**12.03.2025   Bulletin 2025/11**

(21) Application number: **24191615.4**

(22) Date of filing: **30.07.2024**

(51) International Patent Classification (IPC):
$H01M\ 4/136^{(2010.01)}$   $H01M\ 4/36^{(2006.01)}$
$H01M\ 4/48^{(2010.01)}$   $H01M\ 4/58^{(2010.01)}$
$H01M\ 4/62^{(2006.01)}$   $H01M\ 10/0525^{(2010.01)}$
$H01M\ 4/02^{(2006.01)}$

(52) Cooperative Patent Classification (CPC):
H01M 4/136; H01M 4/364; H01M 4/48; H01M 4/58;
H01M 4/5815; H01M 4/582; H01M 4/624;
H01M 10/0525; H01M 2004/028; H01M 2300/0017

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **17.08.2023   KR 20230107863**

(71) Applicant: **SAMSUNG SDI CO., LTD.**
**Giheung-gu**
**Yongin-si, Gyeonggi-do**
**17084 (KR)**

(72) Inventors:
 • **Lim, Hyungsub**
   **17084 Gyeonggi-do (KR)**
 • **Son, Inhyuk**
   **17084 Gyeonggi-do (KR)**
 • **Jo, Sungnim**
   **17084 Gyeonggi-do (KR)**
 • **Shim, Kyueun**
   **17084 Gyeonggi-do (KR)**
 • **Park, Taehyun**
   **17084 Gyeonggi-do (KR)**
 • **Lee, Jieun**
   **17084 Gyeonggi-do (KR)**

(74) Representative: **Michalski Hüttermann & Partner**
**Patentanwälte mbB**
**Kaistraße 16A**
**40221 Düsseldorf (DE)**

(54)   **SOLID SECONDARY BATTERY AND METHOD OF MANUFACTURING THE SAME**

(57)   A solid secondary battery and a method of manufacturing the same are provided. The solid secondary battery includes a cathode layer, an anode layer, a solid electrolyte layer provided between the cathode layer and the anode layer, wherein the cathode layer includes a cathode current collector and a cathode active material layer provided on one surface or two surfaces of the cathode current collector. The cathode active material layer includes a composite cathode active material, and the composite cathode active material includes a composite of $M_2S$, an alkali metal salt, and an inorganic electronic-conductive structure, wherein M is an alkali metal, and the alkali metal is Li or Na. The inorganic electronic-conductive structure has an electronic conductivity of $11\times10^{-3}$ S/cm or more, and the composite includes a solid solution of the $M_2S$ and the alkali metal salt.

**EP 4 521 487 A1**

## Description

### CROSS-REFERENCE TO RELATED APPLICATION

This application claims priority to and the benefit of Korean Patent Application No. 10-2023-0107863, filed on August 17, 2023, in the Korean Intellectual Property Office, the entire content of which is incorporated herein by reference.

### BACKGROUND

#### 1. Field

According to one or more embodiments, the present disclosure relates to a solid secondary battery and a method of manufacturing the same.

#### 2. Description of the Related Art

Recently, in accordance with industrial demand, batteries having relatively high energy density and high safety have been actively developed or pursued. For example, lithium batteries are utilized in one or more suitable applications including information devices, communication devices, vehicles, and/or the like. Because vehicles are intimately intertwined and related to people's activities, e.g., on an everyday basis, safety is important.

A short circuit in lithium batteries utilizing a liquid electrolyte may increase the likelihood of risks of overheating and increase the possibility of fires and/or explosions. Solid secondary batteries utilizing a solid electrolyte instead of a liquid electrolyte have been proposed because solid electrolytes have a lower possibility of ignition as compared with liquid electrolytes.

Implementation of a solid electrolyte into a solid secondary battery, instead of a liquid electrolyte, may thus reduce the possibility of fires or explosions. Solid batteries may provide an improved safety profile for the devices discussed herein.

### SUMMARY

One or more aspects are directed toward a solid secondary battery including a cathode with an improved electronic-conductive network to provide improved initial efficiency, high-rate characteristics, and volumetric energy density.

One or more aspects provide a method of manufacturing the described solid secondary battery.

Additional aspects will be set forth in part in the description which follows and, in part, will be apparent from the description, or may be learned by practice of the presented embodiments of the present disclosure.

According to one or more embodiments, a solid secondary battery includes a cathode layer, an anode layer, and a solid electrolyte layer provided between the cathode layer and the anode layer, wherein the cathode layer includes a cathode current collector and a cathode active material layer provided on at least one surface (e.g., one surface or two (e.g., opposite) surfaces (sides)) of the cathode current collector, the cathode active material layer includes a composite cathode active material, and the composite cathode active material includes a composite of $M_2S$, an alkali metal salt, and an inorganic electronic-conductive structure, wherein M is an alkali metal, and the alkali metal is Li or Na, and the inorganic electronic-conductive structure has an electronic conductivity of $11 \times 10^{-3}$ siemens per centimeter (S/cm) or more.

A particle size of the composite of the $M_2S$, the alkali metal salt, and the inorganic electronic-conductive structure may be 2 micrometer ($\mu$m) or less. The composite of the $M_2S$, the alkali metal salt, and the inorganic electronic-conductive structure may further include a carbon-based material.

According to one or more embodiments, a method of manufacturing a solid secondary battery including performing first milling of $M_2S$ and an alkali metal salt, adding an inorganic electronic-conductive structure to a first-milled product and performing second milling to obtain a composite, preparing a cathode by utilizing a composition obtained by adding a binder to the composite and mixing the binder with the composite, and arranging a solid electrolyte layer between the cathode and the anode.

In the obtaining of the composite, a carbon-based material may be further added to the composition.

### BRIEF DESCRIPTION OF THE DRAWINGS

The previously described and other aspects, features, and advantages of certain embodiments of the present disclosure will be more apparent from the following description taken in conjunction with the accompanying drawings, in which:

FIG. 1 is a diagram showing a cathode active material layer according to one or more embodiments of the present disclosure;

FIG. 2A is a diagram showing results of evaluating X-ray diffraction (XRD) spectra of a composite and a simple mixture of $Li_2S$, LiI, and $MoS_2$ by utilizing Cu K$\alpha$ radiation according to one or more embodiments of the present disclosure;

FIG. 2B is an enlarged diagram of a partial region of FIG. 2A; and

FIGS. 3-8 are cross-sectional views of solid secondary batteries according to one or more embodiments of the present disclosure.

## DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of one or more of the associated listed items. Expressions such as "at least one of," if (e.g., when) preceding a list of elements, modify the entire list of elements and do not modify the individual elements of the list.

The terminology utilized hereinbelow is utilized for the purpose of describing particular embodiments only and is not intended to limit the present disclosure. As utilized herein, the singular forms are intended to include the plural forms as well, unless the context clearly indicates otherwise. Unless otherwise defined, all terms (including chemical, technical and scientific terms) utilized in the present disclosure have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

Embodiments are described in the present disclosure with reference to cross-sectional views which are schematic diagrams of idealized embodiments. As such, variations from the shapes of the illustrations as a result, for example, of manufacturing techniques and/or tolerances, are to be expected. Thus, the embodiments described in the present disclosure should not be construed as limited to the particular shapes regions of illustrated in the present disclosure but may include deviations in shapes that result, for example, from manufacturing. For example, regions illustrated or described as being flat may be typically rough and/or have nonlinear features. Moreover, sharp-drawn angles may be round. Thus, regions illustrated in the drawings are schematic in nature and their shapes are not intended to illustrate the actual shape of a region and are not intended to limit the scope of the claims.

Throughout the specification, if (e.g., when) a component, such as a layer, a film, a region, or a plate, is described as being "above" or "on" another component, the component may be directly above another component, or there may be yet another component therebetween. It will be understood that although the terms "first," "second," and/or the like may be utilized herein to describe one or more suitable elements, these elements should not be limited by these terms. These terms are only utilized to distinguish one element from another element. The described terms are utilized only to distinguish one component from another. Components having substantially the same functional configuration in the present specification and drawings are denoted by the same reference numerals, and redundant descriptions thereof will not be provided.

The present disclosure may, however, be embodied in different forms and should not be construed as limited to the embodiments described in the present disclosure. These embodiments are provided so that the present disclosure will be thorough and complete, and will fully convey the scope of the present disclosure to those skilled in the art. Like reference numerals designate like elements, and duplicative descriptions thereof may not be provided.

As used herein, expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

If (e.g., when) it is described that an element is "on" another element, it will be understood that the element may be provided directly on another element or still another element may be interposed therebetween. In some embodiments, if (e.g., when) it is described that an element is "directly on" another element, still another element is not interposed therebetween.

It will be understood that, although the terms "first," "second," and "third" may be utilized in the present disclosure to describe one or more suitable elements, components, regions, layers, and/or sections, these elements, components, regions, layers, and/or sections should not be limited by these terms. These terms are only utilized to distinguish one element, component, region, layer, or section from another region, layer, or section. Thus, a first element, component, region, layer, or section described may be termed a second element, component, region, layer, or section without departing from the teachings of the present disclosure.

The term utilized in the present disclosure is intended to describe only a specific embodiment and is not intended to limit the present disclosure. As utilized herein, the singular forms "a," "an," and "the" are intended to include the plural forms, including "at least one," unless the content (e.g., amount) clearly indicates otherwise. "At least one" should not be construed as being limited to the singular. As utilized in the present disclosure, the term "and/or" includes any and all combinations of one or more of the associated listed items. The terms "including," "includes," "include," "having," "has," "have," "comprises," "comprise," and/or "comprising," if (e.g., when) utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath","," "lower," "above," and "upper" may be utilized herein to easily describe one element or feature's relationship to another element or feature. It will be understood that the spatially relative terms are intended to encompass different orientations of a device in utilize or operation in addition to the orientation illustrated in the drawings. For example, if (e.g., when) a device in the drawings is turned over, elements described as "" or "beneath" other elements or features would then be "above" or "over" the other elements or features. Thus, the example term "" may encompass both (e.g., simultaneously) orientations of above and. The device may be otherwise oriented (rotated 90 degrees or at other orientations), and the spatially relative terms utilized in the present disclosure may be interpreted accordingly.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

**Definitions**

"Group" refers to a group of the periodic table of the elements according to the International Union of Pure and Applied Chemistry ("IUPAC") Groups 1-18 group classification system.

In the present disclosure, the term "particle size" or "particle diameter" refers to an average diameter if (e.g., when) particles are spherical and refers to an average major axis length if (e.g., when) particles are non-spherical. A particle diameter may be measured utilizing a particle size analyzer (PSA). A "particle size" or "particle diameter" is, for example, an average particle diameter. An "average particle diameter" refers to, for example, a median particle diameter (D50).

D50 refers to a particle size corresponding to a 50 % cumulative volume if (e.g., when) a particle size distribution measured through a laser diffraction method is calculated from particles having a smaller particle size.

D90 refers to a particle size corresponding to a 90 % cumulative volume if (e.g., when) a particle size distribution measured through a laser diffraction method is calculated from particles having a smaller particle size.

D10 refers to a particle size corresponding to a 10 % cumulative volume if (e.g., when) a particle size distribution measured through a laser diffraction method is calculated from particles having a smaller particle size.

The term "metal" as utilized herein includes all of metals and metalloids such as silicon and germanium in an elemental or ionic state.

The term "alloy" as utilized herein refers to a mixture of two or more metals.

The term "electrode active material" as utilized herein refers to an electrode material that may undergo lithiation and delithiation.

The term "cathode active material" as utilized herein refers to a cathode material that may undergo lithiation and delithiation.

The term "anode active material" as utilized herein refers to an anode material that may undergo lithiation and delithiation.

The terms "lithiate" and "lithiating" as utilized herein refer to a process of adding lithium to an electrode active material.

The terms "delithiate" and "delithiating" as utilized herein refer to a process of removing lithium from an electrode active material.

The terms "charge" and "charging" as utilized herein refer to a process of providing electrochemical energy to a battery.

The terms "discharge" and "discharging" as utilized herein refer to a process of removing electrochemical energy from a battery.

The terms "positive electrode" and "cathode" as utilized herein refer to an electrode at which electrochemical reduction and lithiation occur during a discharging process.

The terms "negative electrode" and "anode" as utilized herein refer to an electrode at which electrochemical oxidation and delithiation occur during a discharging process.

The term "length", "thickness", and "width" as utilized herein refers to, for example, an average length, an average thickness, and an average width respectively. The "length", "thickness", and "width" measured utilizing software from a scanning electron microscope image.

While specific embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications, variations, improvements, and substantial equivalents.

Hereinafter, a composite cathode active material and a cathode and solid secondary battery including the same according to embodiments will be described in more detail.

**Composite cathode active material**

A composite cathode active material according to embodiments may include a composite of $M_2S$, an alkali metal salt, and an inorganic electronic-conductive structure, wherein M may be an alkali metal, the alkali metal may be Li or Na, and the inorganic electronic-conductive structure may have an electronic conductivity of $1\times10^{-3}$ S/cm or more or $1\times10^{-2}$ S/cm or more. Electronic conductivity may be measured by utilizing, for example, electrochemical impedance spectroscopy, a direct current polarization method, and/or the like. The composite including the inorganic electronic-conductive structure may have electronic conductivity in such ranges, and thus the internal resistance of the composite cathode electrode active material including the composite may be reduced. The initial efficiency, electrode energy density, and lifespan characteristics of a solid secondary battery including the composite cathode active material may be improved.

The size of an $M_2S$ crystallite obtained from an X-ray diffraction (XRD) spectrum of the composite may be less than 10 nm, and the composite may include a solid solution of the $M_2S$ and the alkali metal salt.

The inorganic electronic-conductive structure may have a small particle size and may be uniformly dispersed in the composite, which makes it advantageous for forming a conductive network. The inorganic electronic-conductive structure may have a zero-dimensional form, a one-dimensional form, a two-dimensional form, a three-dimensional form, or a combination thereof.

The zero-dimensional form may be a particle form, the one-dimensional shape may be a fiber form, and the two-dimensional shape may be a plate form. If (e.g., when) a cathode and a solid secondary battery are manufactured by utilizing the composite that uses such an inorganic electronic-conductive structure, initial efficiency (specific capacity) may be improved due to a reduction in characteristics of a side reaction with a solid electrolyte. In some embodiments, a side reaction refers to, for example, an increase in resistance due to a reaction between a solid electrolyte and a hydroxyl group ($H_2O$) present in a carbon-based material layer and an increase in resistance due to a reaction between carbon and liquid lithium polysulfide ($Li_2S_4 < Li_2S_6$). A carbon-based material may refer to graphene, carbon nanofibers (CNFs), and/or the like which is utilized as a conductive material.

The content (e.g., amount) of the inorganic electronic-conductive structure in the composite may be in a range of about 1 part by weight to about 30 parts by weight, about 1 part by weight to about 20 parts by weight, about 1 part by weight to about 15 parts by weight, or about 5 parts by weight to about 15 parts by weight with respect to about 100 parts by weight of the composite.

The inorganic electronic-conductive structure may have a length of about 1 $\mu$m to 50 $\mu$m and a thickness of about 0.01 $\mu$m to 10 $\mu$m, and the $M_2S$ may have a size of about 0.1 nm to about 10 $\mu$m. If (e.g., when) the inorganic electronic-conductive structure with such length and thickness is utilized, an electronic-conductive network in a cathode may be improved, thereby manufacturing a solid secondary battery having improved lifespan characteristics. Due to strengthening of the electronic-conductive network, the content (e.g., amount) of a conductive material in the cathode may be reduced, thereby improving an energy density in an electrode. Due to a reduction in content (e.g., amount) of the conductive material in the cathode, the content (e.g., amount) of lithium sulfide may be relatively increased, thereby improving initial efficiency.

A material may be utilized for the inorganic electronic-conductive structure as long as the material has a two-dimensional structure, contains a chalcogenide material, and has electronic conductivity.

By utilizing the inorganic electronic-conductive structure having the one-dimensional structure, a thin film and a cathode with improved electrode stability may be prepared, and by utilizing the inorganic electronical conductive structure having the two-dimensional structure, an effect of suppressing the volume expansion of a cathode may be improved.

The inorganic electronic-conductive structure may include a transition metal sulfide, a sulfide of at least one metal of metals of groups 3 to 5 of the periodic table, or a combination thereof, and the inorganic electronic-conductive structure may include titanium, vanadium, chromium, manganese, iron, cobalt, nickel, copper, zinc, niobium, tantalum, molybdenum, tungsten, or a combination thereof.

A metal sulfide, for example, a transition metal sulfide, may include at least one metal material selected from among $ZrS_2$, $FeS$, $FeS_2$, $CuS$, $Cu_2S$, $CuS_2$, $Cu_9S_8$, $Cu_7S_4$, $CoS$, $CoS_2$, $Co_3S_4$, $Co_9S_8$, $NiS$, $NiS_2$, $Ni_9S_8$, $Ni_3S_2$, $VS$, $VS_2$, $V_2S_3$, $V_2S_5$, $VS_4$, $NbS_2$, $NbS_3$, $NbS_4$, $NbS_5$, $Nb_2S_3$, $Nb_2S_5$, $TaS_2$, $TaS_3$, $TaS_4$, $TaS_5$, $Ta_2S_3$, $Ta_2S_5$, $Cr_2S_3$, $CrS_3$, $MoS_2$, $MoS_3$, $MoS_4$, $WS_2$, $WS_3$, $WS_4$, $WS_5$, $MnS$, $Mn_2S_3$, $TiS_2$, $NiNb_3S_6$, $Cu_2MoS_4$, and $Cu_4Mo_6S_8$. For example, at least one metal sulfide may be selected from among $FeS_2$, $CuS_2$, $CoS_2$, $Co_3S_4$, $NiS_2$, $VS_2$, $VS_4$, $NbS_2$, $NbS_3$, $NbS_4$, $NbS_5$, $TaS_2$, $TaS_3$, $TaS_4$, $TaS_5$, $CrS_3$, $MoS_2$, $MoS_3$, $MoS_4$, $WS_2$, $WS_3$, $WS_4$, and $WS_5$. The transition metal sulfide may have, for example, a two-dimensional plate form.

According to another embodiment, the inorganic electronic-conductive structure may include, for example, at least metal oxide selected from among $VO_2$, $ReO_2$, $CrO_2$, $TiN$, $TiO$, $TiO_x$ (wherein $0.75<x<1.45$), $Ti_nO_{2n-1}$ ($4<n<10$), $ReO_3$, $CrO_3$, $VO_3$, $SnO_2$, $TiO_2$, $ZrO_2$, $Al_2O_3$, and $TeN$, or a combination thereof.

The inorganic electronic-conductive structure may be, for example, an alumina fiber, a zirconia fiber, a titania fiber, a TeN fiber, a $SnO_2$ fiber, or a combination thereof. If (e.g., when) the inorganic electronic-conductive structure has such a fiber form, the inorganic electronic-conductive structure may have a length of about 0.1 $\mu$m to about 5 $\mu$m, a diameter of about 0.01 um to about 0.5um, and an aspect ratio of 10 or more.

If (e.g., when) the inorganic electronic-conductive structure has the two-dimensional plate form, the inorganic electronic-conductive structure may have a length of about 1 $\mu$m to about 50 $\mu$m and a thickness of about 0.01 $\mu$m to about 10 $\mu$m, and the $M_2S$ may have a size of about 0.1 nm to about 10 $\mu$m. The alkali metal salt (LiI) may have a size of about 1 nm to about 10 $\mu$m.

According to some embodiments, a size ratio between the inorganic electronic-conductive structure and LiI may be, for example, in a range of about 3:1 to about 0.5:1, and a size ratio between the inorganic electronic-conductive structure and $Li_2S$ may be, for example, in a range of about 2:1 to about 0.5:1.

According to another embodiment, the size of the inorganic electronic-conductive structure may be greater than the size of lithium sulfide and the alkali metal salt (LiI), and the particle size may gradually decrease in the order of the inorganic electronic-conductive structure, the alkali metal salt (LiI), and $M_2S$. In some embodiments, the size is an arithmetic average of particle diameters of a plurality of particles measured, for example, in a scanning electron microscope (SEM) image by utilizing software.

The size of the $M_2S$ may be smaller than or equal to the size of the alkali metal salt, the size of the inorganic electronic-conductive structure may be greater than the size of the lithium sulfide and the alkali metal salt, and the particle size may gradually decrease in the order of the inorganic electronic-conductive structure, alkali metal salt, and the $M_2S$.

The size ratio between the inorganic electronic-conductive structure and LiI may be, for example, in a range of about 3:1 to about 1.5:1, and the size ratio between the inorganic electronic-conductive structure and $Li_2S$ may be, for example, in a range of about 2:1 to about 1.5:1.

M may be an alkali metal. The alkali metal may be Li or Na. The $M_2S$ may be, for example, $Li_2S$ or $Na_2S$. The composite may include the solid solution of the $M_2S$ and the alkali metal salt.

The $M_2S$ may form the composite together with the alkali metal salt and the inorganic electronic-conductive structure, and thus the ionic conductivity and electronic conductivity of the $M_2S$ may be improved concurrently (e.g., simultaneously). The composite may include the alkali metal salt so that the ionic conductivity of the composite cathode active material may be improved and the internal resistance of a cathode and lithium battery including the composite cathode active material may be reduced. The composite may include the inorganic electronic-conductive structure so that the electronic conductivity of the composite cathode active material may be improved and the internal resistance of a cathode and solid secondary battery including the composite cathode active material may be reduced.

The composite may include an $M_2S$ crystallite, and the size of the $M_2S$ crystallite may be decreased to 10 nm or less so that a change in volume of the $M_2S$ crystallite during charging/discharging may be reduced. For example, as the size of the $M_2S$ crystallite decreases, a change in volume caused by one $M_2S$ crystallite decreases so that an overall change in volume of the composite during charging/discharging may be reduced For example, as the size of the $M_2S$ crystallite decreases, a grain boundary between a plurality of $M_2S$ crystallites may be more easily accommodate a change in volume of the $M_2S$ crystallite during charging/discharging so that a change in volume of the composite during charging/discharging may be reduced. The possibility of defects such as cracks due to a change in volume of the composite during charging/discharging may be reduced. The composite cathode active material may include the composite, and thus the cycle characteristics of a secondary battery including the composite cathode active material may be improved. For example, the lifespan characteristics of a lithium battery including the composite cathode active material may be improved.

The composite may include the $M_2S$ crystallite, and the size of the $M_2S$ crystallite may be decreased to 10 nm or less so that a contact area between the $M_2S$ crystallite and the alkali metal salt and/or carbon-based material may be further increased. The contact area between the $M_2S$ crystallite and the alkali metal salt and/or carbon-based material may be increased, and thus the ionic conductivity and/or electronic conductivity of the composite may be further improved. The composite cathode active material may include the composite, and thus the reversibility of an electrode reaction may be improved in a secondary battery including the composite cathode active material. In some embodiments, the specific capacity of the composite cathode active material may be increased.

The composite may include the solid solution of the $M_2S$ and the alkali metal salt, and thus the ionic conductivity of the composite may be increased. For example, the solid solution of the $M_2S$ and the alkali metal salt may include alkali metal ions provided in the $M_2S$ crystallite, and thus the ionic conductivity of the solid solution of the $M_2S$ and the alkali metal salt may be improved as compared with the ionic conductivity of the $M_2S$. In some embodiments, the ionic conductivity of the composite may be improved, and the internal resistance of the composite may be reduced. The composite cathode active material may include the composite, and thus the cycle characteristics of a secondary battery including the composite cathode active material may be improved. For example, the high-rate characteristics of a secondary battery including the composite cathode active material may be improved.

A $Li_2S$-alkali metal salt-inorganic electronic-conductive structure composite is distinguished from a simple mixture of $Li_2S$, an alkali metal salt, and a carbon-based structure. A simple mixture of $Li_2S$, an alkali metal salt, and an inorganic electronic-conductive structure may provide high interfacial resistance because a dense interface between the $Li_2S$, the alkali metal salt, and the carbon-based structure may not be maintained, resulting in degradation in the lifespan characteristics of a solid secondary battery.

The composite may include the $M_2S$. The $M_2S$ may have a high theoretical capacity, and thus a secondary battery having a high energy density may be provided. However, in order to overcome the shortcomings such as the low ionic conductivity and/or electronic conductivity of the $M_2S$, a composite between the $M_2S$, and the alkali metal salt and the carbon-based material may be formed. The content (e.g., amount) of the $M_2S$ in the composite may be, for example, in a range of 10 about wt% to about 80 wt%, about 20 wt% to about 70 wt%, about 30 wt% to about 60 wt%, or about 40 wt% to about 60 wt% of the total weight of the composite. If (e.g., when) the content (e.g., amount) of the $M_2S$ is excessively high, it may not be easy to improve the ionic conductivity and/or electronic conductivity of the $M_2S$. If (e.g., when) the content (e.g., amount) of the $M_2S$ is excessively low, the energy density of a secondary battery may decrease.

The composite may include the alkali metal salt. The alkali metal salt may be, for example, a compound that excludes (e.g., does not include) sulfur (S). The alkali metal salt may be, for example, a binary compound or a ternary compound. The alkali metal salt may be, for example, a binary compound including an alkali metal and one type or kind of element selected from Groups 13 to 17 of the periodic table of elements (e.g., selected from among elements in Groups 13 to 17 of the periodic table). The alkali metal salt may be, for example, a ternary compound including an alkali metal and two types (kinds) of elements selected from Groups 13 to 17 of the periodic table of elements.

The alkali metal salt may be, for example, a lithium salt. A lithium salt binary compound may include, for example, $LiI$, $LiBr$, $LiCl$, $LiF$, $LiH$, $Li_2O$, $Li_2Se$, $Li_2Te$, $Li_3N$, $Li_3P$, $Li_3As$, $Li_3Sb$, $Li_3Al_2$, $LiB_3$, or a combination thereof. A lithium salt ternary compound may include, for example, $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, or a combination thereof.

The alkali metal salt may be, for example, a sodium salt. A sodium salt binary compound may include, for example, $NaI$, $NaBr$, $NaCl$, $NaF$, $Na_2O$, $Na_2Se$, $Na_3N$, $Na_3P$, $Na_3As$, $Na_3Sb$, $Na_3Al_2$, $NaB_3$, or a combination thereof. A sodium salt ternary compound may include, for example, $Na_3OCl$, $NaBF_4$, $NaPF_6$, $NaAsF_6$, $NaClO_4$, $NaNO_3$, $NaAlO_2$, $NaAlCl_4$, $NaNO_3$, $Na_2CO_3$, $NaBH_4$, $Na_2SO_4$, $Na_3BO_3$, $Na_3PO_4$, $Na_4NCl$, $Na_5NCl_2$, $Na_3BN_2$, or a combination thereof. The composite may include the described lithium salt or sodium salt, and thus the ionic conductivity of the composite may be further improved. The lithium salt or sodium salt may more easily form a solid solution together with $Li_2S$ or $Na_2S$, for example, in a composite.

The content (e.g., amount) of the alkali metal salt in the composite may be in a range of about 1 wt% to about 40 wt%, about 5 to about 35 wt%, about 10 wt% to about 35 wt%, about 15 wt% to about 35 wt%, about 20 wt% to about 35 wt%, or about 25 wt% to about 35 wt% of the total weight of the composite. If (e.g., when) the content (e.g., amount) of the alkali metal salt excessively increases (high), the energy density of a secondary battery may decrease. If (e.g., when) the content (e.g., amount) of the alkali metal salt is excessively low, the ionic conductivity of the composite may decrease, and the internal resistance of the composite cathode active material may increase. In some embodiments, the cycle characteristics of a secondary battery may be degraded.

A molar ratio of the $M_2S$ to the alkali metal salt in the composite may be, for example, in a range of about 50:50 to about 95:5, about 60:40 to about 95:5, about 60:40 to about 90:10, about 65:35 to about 90:10, about 65:35 to about 85:15, or about 70:30 to about 85:15. The molar ratio of the $M_2S$ to the alkali metal salt in the composite may be, for example, in a range of about 50:50 to about 95:5, about 50:50 to about 90:10, about 50:50 to about 85:15, about 50:50 to about 80:20, about 50:50 to 75:25, or about 50:50 to about 70:30. The $M_2S$ and the alkali metal salt may have a molar ratio in such ranges, and thus the cycle characteristics of a secondary battery including the composite cathode active material may be further improved. If (e.g., when) a mole fraction of the $M_2S$ is excessively high, an effect of improving ionic conductivity by the alkali metal salt may be insignificant. If (e.g., when) the mole fraction of $M_2S$ is excessively low, the energy density of a secondary battery including the composite cathode active material may decrease.

**EP 4 521 487 A1**

A molar ratio of $Li_2S$ or $Na_2S$ to the lithium salt in the composite may be, for example, in a range of about 50:50 to about 95:5, about 60:40 to about 95:5, about 60:40 to about 90:10, about 65:35 to about 90:10, about 65:35 to about 85:15, or about 70:30 to about 85:15. The molar ratio of $Li_2S$ or $Na_2S$ to the lithium salt in the composite may be, for example, in a range of about 50:50 to about 95:5, about 50:50 to about 90:10, about 50:50 to about 85:15, about 50:50 to about 80:20, about 50:50 to 75:25, or about 50:50 to about 70:30. $Li_2S$ or $Na_2S$ and the lithium salt may have a molar ratio in such ranges, and thus the cycle characteristics of a secondary battery including the composite cathode active material may be further improved. If (e.g., when) a mole fraction of $Li_2S$ or $Na_2S$ is excessively high, an effect of improving ionic conductivity by the alkali metal salt may be insignificant. If (e.g., when) the mole fraction of $Li_2S$ or $Na_2S$ is excessively low, the energy density of a solid secondary battery including the composite cathode active material may decrease.

The content (e.g., amount) of the inorganic electronic-conductive structure included in the composite may be, for example, in a range of about 1 wt% to about 30 wt%, about 1 wt% to about 20 wt%, about 5 wt% to about 20 wt%, or about 10 wt% to about 20 wt% of the total weight of the composite. If (e.g., when) the content (e.g., amount) of the inorganic electronic-conductive structure excessively increases, the energy density of a secondary battery may decrease. If (e.g., when) the content (e.g., amount) of the inorganic electronic-conductive structure excessively decreases, the electronic conductivity of the composite may decrease, and thus the internal resistance of the composite cathode active material may increase. In some embodiments, the cycle characteristics of a secondary battery may be degraded. In an X-ray diffraction (XRD) spectrum of the composite cathode active material, peaks may appear at a diffraction angle 2θ of about 14.5°±0.5, a diffraction angle 2θ of about 32.5°±0.5°, and a diffraction angle 2θ of about 58.5°±0.5° in relation to a crystal plane of molybdenum sulfide ($MoS_2$).

The peak appearing at the diffraction angle 2θ of about 14.5°±0.5° may be a peak in a (002) crystal plane of molybdenum sulfide ($MoS_2$), and thus the diffraction angle 2θ may be, for example, about 14.1°. The peak appearing at the diffraction angle 2θ of about 32.5°±0.5° may be a peak in a (100) crystal plane of molybdenum sulfide ($MoS_2$), and thus the diffraction angle 2θ may be, for example, about 32.9°. The peak appearing at the diffraction angle 2θ of about 58.5°±0.5° may be a peak in a (110) crystal plane of molybdenum sulfide ($MoS_2$), and thus the diffraction angle 2θ may be, for example, about 58.8°.

In the XRD spectrum of the composite cathode active material, first diffraction angles of a first peak appearing at a diffraction angle 2θ of about 14.5°±0.5°, a second peak appearing at a diffraction angle 2θ of about 32.5°±0.5°, and a third peak appearing at a diffraction angle 2θ of about 58.5°±0.5° in the composite may appear by respectively shifting to a lower angle than second diffraction angles of a fourth peak appearing at a diffraction angle 2θ of about 14.5°±0.5°, a fifth peak appearing at a diffraction angle 2θ of about 32.5°±0.5°, and a sixth peak appearing at a diffraction angle 2θ of about 58.5°±0.5° in an XRD spectrum of $MoS_2$ utilized to prepare the composite. While a composite is formed during a milling process, a shift to a lower angle may occur.

For example, a position of the first peak may shift to a lower angle than a position of the second peak. In some embodiments, the intensity of the first peak appearing at the diffraction angle 2θ of about 14.5°±0.5° may be reduced as compared with the intensity of the second peak appearing at the diffraction angle 2θ of about 14.5°±0.5° in the XRD spectrum of $MoS_2$ utilized to prepare the composite.

In some embodiments, the crystal change of a $MoS_2$ material may be observed in XRD during a milling process. A lithium sulfide-molybdenum sulfide ($MoS_2$)-carbon-based material composite may have a reduced crystallite size as compared with the lithium sulfide utilized to prepare the composite. A lithium sulfide-molybdenum sulfide ($MoS_2$)-carbon-based material composite may have a reduced crystallite size, and thus a change in volume of a crystallite during charging or discharging may be reduced, thereby reducing a change in volume of the composite including a plurality of crystallites during charging/discharging. Defects such as cracks in the composite cathode active material including the composite may be suppressed or reduced from occurring during charging/discharging. In some embodiments, the cycle characteristics of a solid secondary battery including the composite cathode active material may be improved.

In an XRD spectrum of the composite, for example, a first lattice constant d1 derived from a seventh peak appearing at a diffraction angle 2θ of 27°±2.0° corresponding to a (111) crystal plane of the $M_2S$ may be larger than a second lattice constant d2 derived from an eighth peak appearing at a diffraction angle 2θ of about 27°±2.0° corresponding to a (111) crystal plane of $M_2S$ in an XRD spectrum of the $M_2S$ utilized to prepare the composite. An $M_2S$-alkali metal salt-inorganic electronic-conductive structure composite may have a larger lattice constant d than the $M_2S$ utilized to prepare the composite, and thus alkali metal ions may be more easily transferred in an $M_2S$ crystal structure of the composite. The ionic conductivity of the composite cathode active material including the composite may be further improved. The internal resistance of a secondary battery including the composite cathode active material may be reduced, and the cycle characteristics thereof may be improved. A difference between the first lattice constant d1 and the second lattice constant d2 may be 0.05 Å or more, 0.1 Å or more, 0.15 Å or more, 0.2 Å or more, or 0.25 Å or more. The size of the first lattice constant d1 may be, for example, 5.78 Å or more, 5.80 Å or more, 5.82 Å or more, 5.85 Å or more, 5.90 Å or more, 5.95 Å or more, or 6.0 Å or more. The first lattice constant d1 of the composite may have such a size, and thus the ionic conductivity of the composite cathode active material including the composite may be further improved. The internal resistance of a secondary battery including the composite cathode active material may be reduced, and the cycle characteristics thereof may be improved.

In the XRD spectrum of the composite, for example, the seventh peak appearing at the diffraction angle 2θ of 27°±2.0° corresponding to the (111) crystal plane of the $M_2S$ may have a seventh diffraction angle, and the eighth peak appearing at the diffraction angle 2θ of about 27°±2.0° corresponding to the (111) crystal plane of the $M_2S$ in the XRD spectrum of the $M_2S$ utilized to prepare the composite may have an eighth diffraction angle. The seventh diffraction angle may be less than the eighth diffraction angle. For example, a position of the seventh peak may shift to a lower angle than a position of the eighth peak. In some embodiments, the $M_2S$-alkali metal salt-inorganic electronic-conductive structure composite may have a reduced crystallite size as compared with the $M_2S$ utilized to prepare the composite. An $M_2S$-alkali metal salt-carbon-based material composite may have a reduced crystallite size, and thus a change in volume of a crystallite during charging or discharging may be reduced, thereby reducing a change in volume of the composite including a plurality of crystallites during charging/discharging. Defects such as cracks in the composite cathode active material including the composite may be suppressed or reduced from occurring during charging/discharging. In some embodiments, the cycle characteristics of a secondary battery including the composite cathode active material may be improved.

In the XRD spectrum of the composite, for example, the seventh peak appearing at the diffraction angle 2θ of 27°±2.0° corresponding to the (111) crystal plane of the $M_2S$ may have a first full width at half maximum (FWMH) (FWHM1), and the eighth peak appearing at the diffraction angle 2θ of about 27±2.0° corresponding to the (111) crystal plane of the $M_2S$ in the XRD spectrum of the $M_2S$ utilized to prepare the composite may have a second FWHM (FWHM2). The first FWMH may be greater than the second FWMH. In some embodiments, the $M_2S$-alkali metal salt-inorganic electronic-conductive structure composite may have an increased lattice strain as compared with the $M_2S$ utilized to prepare the composite. For example, the $M_2S$ and the alkali metal salt may form a solid solution, and thus the $M_2S$-alkali metal salt-inorganic electronic-conductive structure composite may have an increased lattice strain. The $M_2S$-alkali metal salt-inorganic electronic-conductive structure composite may have an increased FWHM as compared with the $M_2S$ utilized to prepare the composite, and thus the ionic conductivity of the composite cathode active material including the composite may be further improved. The internal resistance of a solid secondary battery including the composite cathode active material may be reduced, and the cycle characteristics thereof may be improved.

The first FWHM may be, for example, 1° or more, 1.05° or more, 1.10° or more, or 1.15° or more. The composite may have the first FWHM (FWHM1) in such ranges, and thus the ionic conductivity of the composite cathode active material including the composite may be further improved. The internal resistance of a secondary battery including the composite cathode active material may be reduced, and the cycle characteristics thereof may be improved.

According to embodiments, with respect to about 100 parts by weight of the composite, the content (e.g., amount) of the $M_2S$ may be in a range of about 30 parts by weight to about 80 parts by weight, the content (e.g., amount) of the alkali metal salt may be in a range of about 1 part by weight to about 40 parts by weight, and the content (e.g., amount) of the inorganic electronic-conductive structure may be in a range of about 1 part by weight to about 30 parts by weight.

The particle size (diameter) of the composite cathode active material (in the form of particles), for example, the size of composite particles (of the active material), may be, for example, 10 μm or less, 8 μm or less, 5 μm or less, 2 μm or less, 1.5 μm or less, or 1 μm or less. The particle size of the composite particles may be, for example, in a range of about 1 μm to about 10 μm, in a range of about 2 μm to about 8 μm, or in a range of about 3 μm to about 8 μm, The size of the composite particles may be, for example, in a range of about 0.1 μm to about 10 μm, about 0.1 μm to about 8 μm, about 0.1 μm to about 5 μm, about 0.1 μm to about 2 μm, about 0.1 μm to about 1.5 μm, or about 0.1 μm to about 1 μm. The composite particles may have a size in such ranges, and thus a change in volume during charging/discharging may be suppressed or reduced, thereby suppressing the deterioration of the composite cathode active material including the composite during charging/discharging. If (e.g., when) the size of the composite particles excessively increases, a change in volume of the composite during charging/discharging may increase, which may accelerate the deterioration of the composite cathode active material including the composite. In some embodiments, the cycle characteristics of a secondary battery including the composite cathode active material may be degraded if (e.g., when) the composite particles do not have a size in such ranges.

In some embodiments, the cycle characteristics of a solid secondary battery including the composite cathode active material, for example, the lifespan characteristics thereof, may be improved. The size of the composite particles, for example, the particle diameter of the composite particles, may be measured by utilizing, for example, a laser diffraction beam, a SEM, and/or the like. The particle diameter of the composite may be an arithmetic average of particle diameters of a plurality of particles measured, for example, in a SEM image by utilizing software.

The composite may include lithium sulfide particles to which the alkali metal salt with ionic conductivity (e.g., with ion conductor) and the inorganic electronic-conductive structure with electronic conductivity (e.g., with electron conductor) are added, and thus electronic (electron) conduction from the surface to the inside of the composite may be more easily performed. The internal resistance of the composite cathode active material including the composite may be reduced, and the cycle characteristics of a solid secondary battery including the composite cathode active material may be further improved.

In the present specification, the length and thickness of the inorganic electronic-conductive structure may be measured from a SEM image or an optical microscope.

For example, with respect to about 100 parts by weight of the composite, the composite may include the $M_2S$ in a range of about 10 parts by weight to about 80 parts by weight, the alkali metal salt in a range of about 1 part by weight to about 40 parts by weight, and the inorganic electronic-conductive structure in a range of about 1 part by weight to about 20 parts by weight. The content (e.g., amount) of the $M_2S$ included in the composite may be, for example, in a range of about 10 parts by weight to about 80 parts by weight, about 20 parts by weight to about 70 parts by weight, about 30 parts by weight to about 60 parts by weight, or about 40 parts by weight to about 60 parts by weight with respect to about 100 parts by weight of the composite. The content (e.g., amount) of the alkali metal salt included in the composite may be, for example, in a range of about 10 parts by weight to about 40 parts by weight, about 15 parts by weight to about 40 parts by weight, about 20 parts by weight to about 40 parts by weight, or about 25 parts by weight to about 35 parts by weight with respect to about 100 parts by weight of the composite. In the content (e.g., amount) of the inorganic electronic-conductive structure included in the composite may be, for example, in a range of about 1 part by weight to about 20 parts by weight, about 5 parts by weight to about 20 parts by weight, or about 5 parts by weight to about 15 parts by weight with respect to about 100 parts by weight of the composite. The composite may include the $M_2S$, the alkali metal salt, and the inorganic electronic-conductive structure in such ranges, and thus the composite cathode active material including the composite may provide excellent or suitable ionic conductivity and/or electronic conductivity.

The composite of the $M_2S$, the alkali metal salt, and the inorganic electronic-conductive structure may further include a carbon-based material.

The ionic conductivity of the composite may be, for example, $1 \times 10^{-5}$ S/cm or more, $2 \times 10^{-5}$ S/cm or more, $4 \times 10^{-5}$ S/cm or more, $6 \times 10^{-5}$ S/cm or more, $8 \times 10^{-5}$ S/cm or more, or $1 \times 10^{-4}$ S/cm or more at a temperature of about 25 °C. Ionic conductivity may be measured by utilizing, for example, electrochemical impedance spectroscopy, a DC polarization method, and/or the like. The composite may have ionic conductivity in such ranges, and thus the internal resistance of the composite cathode active material including the composite may be reduced. The cycle characteristics of a secondary battery including the composite cathode active material may be improved. The electronic conductivity of the composite may be, for example, $1 \times 10^{-5}$ S/cm or more, $2 \times 10^{-5}$ S/cm or more, $4 \times 10^{-5}$ S/cm or more, $6 \times 10^{-5}$ S/cm or more, $8 \times 10^{-5}$ S/cm or more, or $1 \times 10^{-4}$ S/cm or more at a temperature of about 25 °C. Electronic conductivity may be measured by utilizing, for example, electrochemical impedance spectroscopy, a direct current (DC) polarization method, and/or the like. The composite may have electronic conductivity in such ranges, and thus the internal resistance of the composite cathode active material including the composite may be reduced. Also, the initial efficiency, electrode energy density, and lifespan characteristics of a solid secondary battery including the composite cathode active material may be improved.

## Cathode

### Cathode: Cathode active material

A cathode according to embodiments may include a cathode current collector and a cathode active material layer provided on at least one surface (e.g., on one or two (opposite) surfaces) of the cathode current collector. The cathode active material layer may include the described composite cathode active material and may further include a solid electrolyte. The cathode may include the composite cathode active material and the solid electrolyte and thus may have further reduced internal resistance. In some embodiments, the cycle characteristics of a secondary battery including the cathode may be further improved.

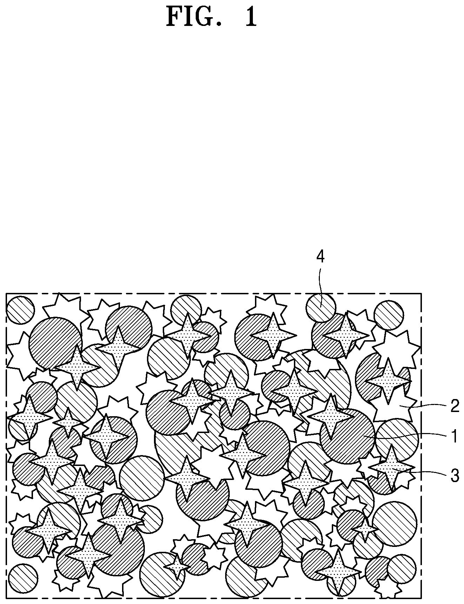

FIG. 1 schematically shows a structure of a cathode active material layer according to embodiments. In FIG. 1, $Li_2S$ 1 may be utilized as an example of $M_2S$, and LiI 2 may be utilized as an example of an alkali metal salt.

Referring to FIG. 1, the cathode active material layer may include the $Li_2S$ 1, the LiI 2, an inorganic electronic-conductive structure 3, and solid electrolyte 4. As shown in FIG. 1, the sizes of the inorganic electronic-conductive structure 3, the LiI 2, and the $Li_2S$ 1 may satisfy 1≤2<3. If (e.g., when) the inorganic electronic-conductive structure 3 has such a size, the inorganic electronic-conductive structure 3 may well form a network that imparts electronic conductivity between lithium sulfides that are insulators. The size of the inorganic electronic-conductive structure 3 may refer to an average size.

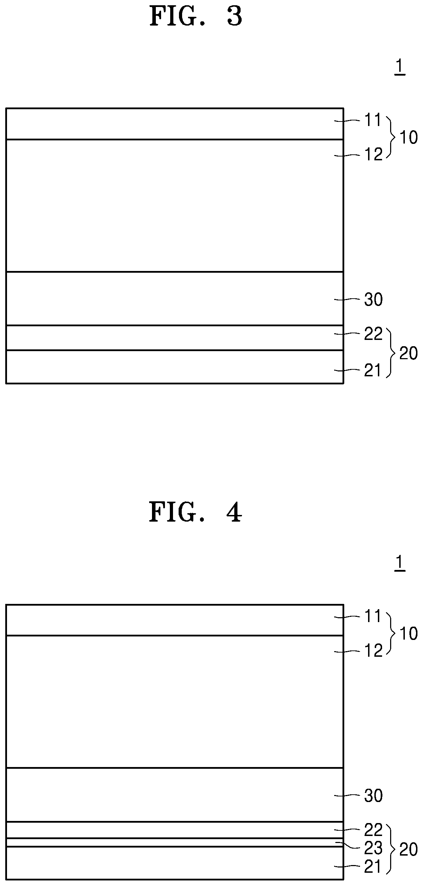

Referring to FIGS. 3 to 8, a cathode layer 10 may include a cathode current collector 11, and a cathode active material layer 12 provided on at least one surface (e.g., one surface or two surfaces) of the cathode current collector 11. The cathode active material layer 12 may include the described composite cathode active material and a solid electrolyte.

The composite cathode active material may be included in a range of about 40 parts by weight to about 90 parts by weight, about 40 parts by weight to about 80 parts by weight, 50 to 80 parts by weight, or about 50 parts by weight to about 70 parts by weight with respect to about 100 parts by weight of the cathode active material layer 12. If (e.g., when) the content (e.g., amount) of the composite cathode active material excessively decreases, the energy density of a secondary battery may decrease. If (e.g., when) the content (e.g., amount) of the composite cathode active material excessively increases, the deterioration of a cathode layer may be accelerated due to a change in volume of the cathode layer during charging/discharging. In some embodiments, the cycle characteristics of a solid secondary battery 1 may be degraded.

The cathode active material layer 12 may additionally include other cathode active materials in addition to the described composite cathode active material.

Other cathode active materials may include, for example, a $Li_2S$-containing composite. The $Li_2S$ composite may include, for example, a composite of $Li_2S$ and a carbon-based material, a composite of $Li_2S$, a carbon-based material, and a solid electrolyte, a composite of $Li_2S$ and a solid electrolyte, a composite of $Li_2S$ and a lithium salt, a composite of $Li_2S$ and a metal carbide, a composite of $Li_2S$, a carbon-based material, and a metal carbide, a composite of $Li_2S$ and a metal nitride, a composite of $Li_2S$, a carbon-based material, and a metal nitride, or a combination thereof.

For example, the $Li_2S$ composite may include $Li_2S$ and a carbon-based material. The carbon-based material may be defined as for the described carbon-based material of the composite cathode active material. A method of preparing a composite of $Li_2S$ and a carbon-based material may be a dry method, a wet method, or a combination thereof, but one or more embodiments are not limited thereto. Any method utilized in the art may be utilized. The method of manufacturing a composite of $Li_2S$ and a carbon-based material may include, for example, milling, heat treatment, deposition, and/or the like, but one or more embodiments are not necessarily limited thereto. Any method utilized in the art may be utilized.

The composite of $Li_2S$, the carbon-based material, and the solid electrolyte may include a carbon-based material and a solid electrolyte. The carbon-based material may be defined as for the described composite of $Li_2S$ and the carbon-based material. As the solid electrolyte, for example, any material utilized as an ion conductive material in the art may be utilized. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide-based solid electrolyte, an oxide-based solid electrolyte, or a combination thereof. The sulfide-based solid electrolyte may include, for example, Li, S, and P and may optionally further include a halogen element. The sulfide-based solid electrolyte may be selected from sulfide-based solid electrolytes utilized in an electrolyte layer. For example, the sulfide-based solid electrolyte may have an ionic conductivity of $1 \times 10^{-5}$ S/cm or more at room temperature. The oxide-based solid electrolyte may include, for example, Li, O, and a transition metal element and may optionally further include other elements. For example, the oxide-based solid electrolyte may be a solid electrolyte having an ionic conductivity of $1 \times 10^{-5}$ S/cm or more at room temperature. The oxide-based solid electrolyte may be selected from oxide-based solid electrolytes utilized in an electrolyte layer.

The composite of $Li_2S$ and the solid electrolyte may include a solid electrolyte. The solid electrolyte may be defined as for the described composite of $Li_2S$, the carbon-based material, and the solid electrolyte.

The composite of $Li_2S$ and the lithium salt may include $Li_2S$ and a lithium salt. The lithium salt may be defined as for the described lithium salt of the composite cathode active material. The lithium salt may include at least one lithium halide compound selected from among LiF, LiCl, LiBr, and LiI. The composite of $Li_2S$ and the lithium salt may be, for example, a composite of $Li_2S$ and a lithium halide. The composite of $Li_2S$ and the lithium salt may include a lithium halide compound and thus may provide further improved ionic conductivity. The composite of $Li_2S$ and the lithium salt may be distinguished from a simple mixture of $Li_2S$, a carbon-based material, and a lithium salt. A simple mixture of $Li_2S$ and a lithium salt may fail to maintain a dense interface between $Li_2S$ and a lithium salt to provide high interfacial resistance, resulting in a reduction in lifespan characteristics of a solid secondary battery.

The composite of $Li_2S$ and the metal carbide may include a metal carbide. The metal carbide may be, for example, a two-dimensional metal carbide. The two-dimensional metal carbide may be represented, for example, by $M_{n+1}C_nT_x$ (wherein M is a transition metal, T is an end group, T is O, OH, and/or F, n=1, 2, or 3, and x is the number of end groups). The two-dimensional metal carbide may be, for example, $Ti_2CT_x$, $(Ti_{0.5}, Nb_{0.5})_2CT_x$, $Nb_2CT_x$, $V_2CT_x$, $Ti_3C_2T_x$, $(V_{0.5}, Cr_{0.5})_3C_2T_x$, $Ti_3CNT_x$, $Ta_4C_3T_x$, $Nb_4C_3T_x$, or a combination thereof. The surface of the two-dimensional metal carbide may be terminated with O, OH, and/or F.

The composite of $Li_2S$, the carbon-based material, and the metal carbide may include a carbon-based material and a metal carbide. The carbon-based material may be defined as for the described composite of $Li_2S$ and the carbon-based material. The metal carbide may be defined as for the described composite of $Li_2S$ and the metal carbide.

The composite of $Li_2S$ and the metal nitride may include a metal nitride. The metal nitride may be, for example, a two-dimensional metal nitride. The two-dimensional metal nitride may be represented, for example, by $M_{n+1}N_nT_x$ (M is a transition metal, T is an end group, T is O, OH, and/or F, n=1, 2, or 3, and x is the number of end groups). The surface of the two-dimensional metal nitride may be terminated with O, OH, and/or F.

The composite of $Li_2S$, the carbon-based material, and the metal nitride may include a carbon-based material and a metal nitride. The carbon-based material may be defined as for the described composite of $Li_2S$ and the carbon-based material. The metal carbide may be defined as for the described composite of $Li_2S$ and the metal nitride.

For example, the cathode active material layer 12 may additionally include a sulfide-based compound that is distinguished from the described cathode active material. The sulfide-based compound may be, for example, a compound including a sulfur element and a metal element other than Li. For example, the sulfide-based compound may be a compound including a sulfur element and at least one of metal elements which have an atomic weight of 10 or more and belong to Groups 1 to 14 of the periodic table of elements. The sulfide-based compound may be, for example, $FeS_2$, $VS_2$,

NaS, MnS, FeS, NiS, CuS, or a combination thereof. The cathode active material layer 12 may additionally include the sulfide-based compound so that the cycle characteristics of a solid secondary battery may be further improved. The content (e.g., amount) of the sulfide-based compound included in the cathode active material layer 12 may be 10 wt% or less, 5 wt% or less, 3 wt% or less, or 1 wt% or less of the total weight of the cathode active material layer 12.

**Cathode: Solid electrolyte**

The cathode active material layer 12 may further include, for example, a solid electrolyte. The solid electrolyte may be, for example, a sulfide-based solid electrolyte. The solid electrolyte included in the cathode layer 10 may be the same as or different from a solid electrolyte included in a solid electrolyte layer 30. The solid electrolyte may be as defined in the part of the solid electrolyte layer 30.

A D50 average particle diameter of the solid electrolyte (in the form of particles) included in the cathode active material layer 12 may be less than a D50 average particle diameter of the solid electrolyte included in the solid electrolyte layer 30. For example, the D50 average particle diameter of the solid electrolyte included in the cathode active material layer 12 may be 90 % or less, 80 % or less, 70 % or less, and 60 % or less, 50 % or less, 40 % or less, 30 % or less, or 2 0% or less of the D50 average particle diameter of the solid electrolyte included in the solid electrolyte layer 30. The D50 average particle diameter may be, for example, a median particle diameter (D50). The median particle diameter (D50) may be a particle size corresponding to a 50 % cumulative volume if (e.g., when) a particle size distribution measured through a laser diffraction method is calculated from particles having a smaller particle size.

The solid electrolyte may be included in a range of about 10 parts by weight to about 60 parts by weight, about 10 parts by weight to about 50 parts by weight, about 20 parts by weight to about 50 parts by weight, or about 30 parts by weight to about 50 parts by weight with respect to about 100 parts by weight of the cathode active material layer 12. If (e.g., when) the content (e.g., amount) of the solid electrolyte excessively decreases, due to an increase in internal resistance of a cathode, the cycle characteristics of a secondary battery may deteriorate. If (e.g., when) the content (e.g., amount) of the sulfide-based solid electrolyte excessively increases, the energy density of the solid secondary battery 1 may decrease.

**Cathode: Conductive material**

The cathode active material layer 12 may further include a conductive material. The conductive material may be, for example, a carbon-based conductive material, a metal-based conductive material, or a combination thereof. The carbon-based conductive material may be, for example, graphite, carbon black (CB), acetylene black (AB), Ketjen black (KB), a carbon fiber, or a combination thereof, but one or more embodiments are not limited thereto. Any material usable as a carbon-based conductive material in the art may be utilized. The metal-based conductive material may be a metal powder, a metal fiber, or a combination thereof, but one or more embodiments are not limited thereto. Any material utilized as a metal-based conductive material in the art may be utilized. The content (e.g., amount) of the conductive material included in the cathode active material layer 12 may be, for example, in a range of about 1 wt% to about 30 wt%, about 1 wt% to about 20 wt%, or about 1 wt% to about 10 wt% of the total weight of the cathode active material layer 12.

The cathode active material layer 12 may include a carbon-based material, and the carbon-based material may be provided only on the composite cathode active material. The cathode active material layer 12 may not additionally include a separate carbon-based material other than the composite cathode active material including the carbon-based material. The cathode active material layer may not include (e.g., may exclude) the separate carbon-based material so that the energy density of the cathode layer 10 and the solid secondary battery 1 may be improved and a manufacturing process may be simplified. In present disclosure, "not including a or any 'component'" "excluding a or any 'component'", "'component'-free", and/or the like refers to that the "component" not being added, selected or utilized as a component in the composition, but the "component" of less than a suitable amount may still be included due to other impurities and/or external factors.

**Cathode: Binder**

The cathode active material layer 12 may further include a binder. The binder may include, for example, styrene butadiene rubber (SBR), polytetrafluoroethylene, polyvinylidene fluoride (PVDF), polyethylene (PE), and/or the like, but one or more embodiments are not limited thereto. Any material utilized as a binder in the art may be utilized. The content (e.g., amount) of the binder included in the cathode active material layer 12 may be, for example, in a range of about 1 wt% to about 10 wt% of the total weight of the cathode active material layer 12. The binder may not be provided.

**Cathode: Other additives**

In addition to the described cathode active material, solid electrolyte, binder, and conductive material, the cathode active material layer 12 may further include, for example, additives such as a filler, a coating agent, a dispersant, and an ion-conductive adjuvant.

As a filler, a coating agent, a dispersant, an ion-conductive adjuvant, and/or the like that may be included in the cathode active material layer 12, suitable materials generally utilized in electrodes of solid secondary batteries may be utilized.

## Cathode: Cathode current collector

The cathode current collector 11 may be provided as a plate, foil, and/or the like made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may not be provided. The thickness of the cathode current collector 11 may be, for example, in a range of about 1 $\mu$m to about 100 $\mu$m, about 1 $\mu$m to about 50 $\mu$m, about 5 $\mu$m to about 25 $\mu$m, or about 10 $\mu$m to about 20 $\mu$m.

The cathode current collector 11 may include, for example, a base film and a metal layer provided on at least one surface (e.g., one surface or two surfaces) of the base film. The base film may include, for example, a polymer. The polymer may be, for example, a thermoplastic polymer. The polymer may include, for example, polyethylene terephthalate (PET), PE, polypropylene (PP), polybutylene terephthalate (PBT), polyimide (PI), or a combination thereof. The base film may be, for example, an insulator. The base film may include an insulating thermoplastic polymer, and thus if (e.g., when) a short circuit occurs, the base film may soften or liquefy to interrupt the operation of a battery, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may serve as an electrochemical fuse to be cut if (e.g., when) an overcurrent occurs, thereby performing a short circuit prevention function. The thickness of the metal layer may be adjusted to adjust a limit current and a maximum current. The metal layer may be plated or deposited on the base film. If (e.g., when) the thickness of the metal layer is decreased, a limit current and/or a maximum current of the cathode current collector 11 may be decreased, and thus the stability of a lithium battery during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly weld the metal layer and the lead tab, a metal chip may be added between the metal layer and the lead tab. The metal chip may be a flake made of the same material as a metal of the metal layer. The metal chip may be, for example, metal foil or a metal mesh. The metal chip may be, for example, aluminum foil, copper foil, or SUS (stainless steel) foil. The metal chip may be provided on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. The thickness of the base film may be, for example, in a range of about 1 $\mu$m to $\mu$m 50 $\mu$m, about 1.5 $\mu$m to about 50 $\mu$m, about 1.5 $\mu$m to about 40 $\mu$m, or about 1 $\mu$m to about 30 $\mu$m. The base film may have a thickness in such ranges, and thus the weight of an electrode assembly may be more effectively reduced. A melting point of the base film may be, for example, in a range of about 100 °C to about 300 °C, about 100 °C to about 250 °C, or about 100 °C to about 200 °C. The base film may have a melting point in such ranges, and thus the base film may be melted and easily coupled to the lead tab in a process of welding the lead tab. In order to improve adhesive strength between the base film and the metal layer, surface treatment such as corona treatment may be performed on the base film. The thickness of the metal layer may be, for example, in a range of about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. The metal layer may have a thickness in such ranges, and thus the stability of an electrode assembly may be secured while conductivity is maintained. The thickness of the metal chip may be, for example, in a range of about 2 $\mu$m to about 10 $\mu$m, about 2 $\mu$m to about 7 $\mu$m, or about 4 $\mu$m to about 6 $\mu$m. The metal chip may have a thickness in such ranges, and thus the metal layer and the lead tab may be more easily connected. The cathode current collector 11 may have such a structure, the weight of a cathode may be reduced, thereby improving the energy density of the cathode and a lithium battery.

## Cathode: Inactive member

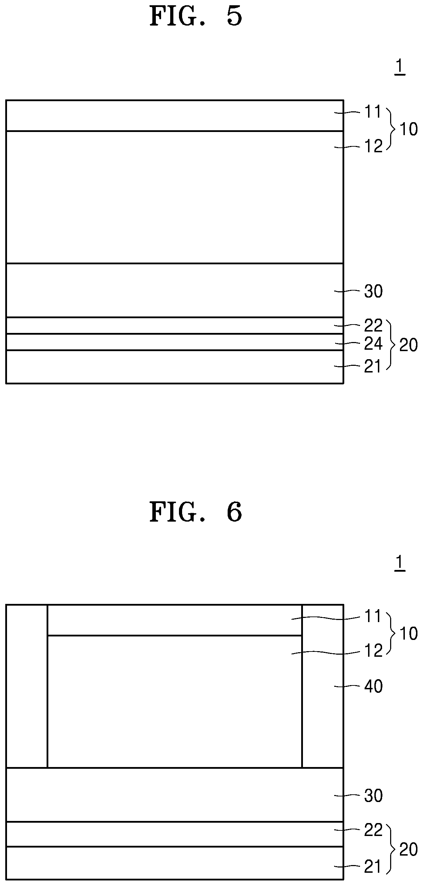

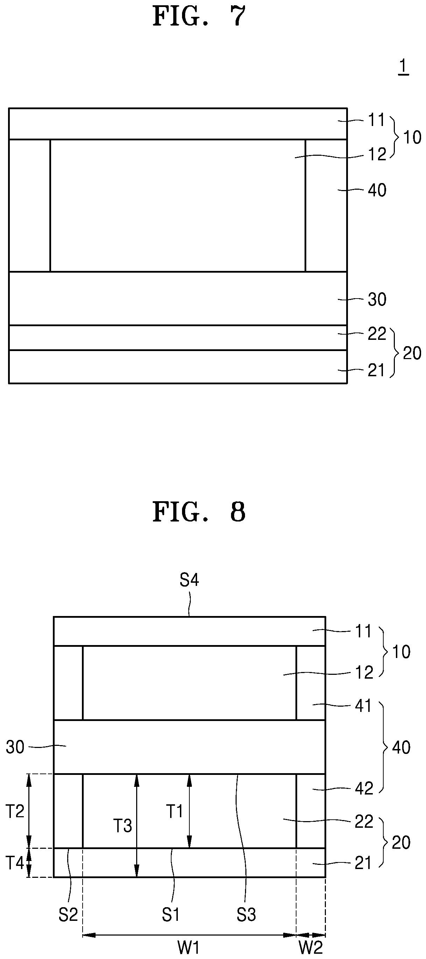

Referring to FIGS. 6 and 7, the cathode layer 10 may include the cathode current collector 11 and the cathode active material layer 12 provided on one surface of the cathode current collector 11. An inactive member 40 may be provided on one side surface of the cathode layer 10. Referring to FIG. 6, the inactive member 40 may be provided on one side surface of each of the cathode active material layer 12 and the cathode current collector 11. Referring to FIG. 7, the inactive member 40 may be provided on one side surface of the cathode active material layer 12 and may be provided between the solid electrolyte layer 30 and the cathode current collector 11 opposing or facing the solid electrolyte layer 30.

The inactive member 40 may not be provided on one side surface of the cathode current collector 11. The solid electrolyte layer 30 may be, for example, a solid electrolyte layer.

The inactive member 40 may be provided to prevent or reduce cracks of the solid electrolyte layer 30 during manufacturing and/or charging/discharging of the solid secondary battery 1, thereby improving the cycle characteristics of the solid secondary battery 1. In the solid secondary battery 1 that does not include the inactive member 40, ununiform pressure may be applied to the solid electrolyte layer 30 in contact with the cathode layer 10 during manufacturing and/or charging/discharging of the solid secondary battery 1 to cause cracks in the solid electrolyte layer 30, and a lithium metal may be grown through the cracks to increase a possibility of the occurrence of a short circuit.

In the solid secondary battery 1, the thickness of the inactive member 40 may be greater than or equal to the thickness of the cathode active material layer 12. In other embodiments, in the solid secondary battery 1, the thickness of the inactive member 40 may be substantially equal to the thickness of the cathode layer 10. The thickness of the inactive member 40 may be equal to the thickness of the cathode layer 10, and thus substantially uniform pressure may be applied between the cathode layer 10 and the solid electrolyte layer 30, and the cathode layer 10 and the solid electrolyte layer 30 may be in sufficiently close contact with each other, thereby reducing interfacial resistance between the cathode layer 10 and the solid electrolyte layer 30. In some embodiments, the solid electrolyte layer 30 may be sufficiently sintered during a process of pressing and manufacturing the solid secondary battery 1, thereby reducing the internal resistance of the solid electrolyte layer 30 and the solid secondary battery 1 including the same.

The inactive member 40 may surround (or be around) the side surface of the cathode layer 10 and may be in contact with the solid electrolyte layer 30. The inactive member 40 may surround (or be around) the side surface of the cathode layer 10 and may be in contact with the solid electrolyte layer 30, thereby effectively suppressing cracks of the solid electrolyte layer 30, which are caused in a portion of the solid electrolyte layer 30, which is not in contact with the cathode layer 10, by a pressure difference during a pressing process. The inactive member 40 may surround (or be around) the side surface of the cathode layer 10 and may be separated from an anode layer 20, for example, a first anode active material layer 22. The inactive member 40 may surround (or be around) the side surface of the cathode layer 10, may be in contact with the solid electrolyte layer 30, and may be separated from the anode layer 20. In some embodiments, a possibility of a short circuit occurring due to physical contact between the cathode layer 10 and the first anode active material layer 22 or a possibility of a short circuit occurring due to the overcharging of lithium may be suppressed or reduced. For example, the inactive member 40 may be provided on one side surface of the cathode active material layer 12 and concurrently (e.g., simultaneously) may be provided on one side surface of the cathode current collector 11, thereby more effectively suppressing a possibility of a short circuit occurring due to contact between the cathode current collector 11 and the anode layer 20.

Referring to FIGS. 6 and 7, the inactive member 40 may extend from one side surface of the cathode layer 10 to an end portion of the solid electrolyte layer 30. The inactive member 40 may extend to the end portion of the solid electrolyte layer 30 so that cracks occurring at the end portion of the solid electrolyte layer 30 may be suppressed or reduced. The end portion of the solid electrolyte layer 30 may be an outermost portion in contact with a side surface of the solid electrolyte layer 30. The inactive member 40 may extend to the outermost portion in contact with the side surface of the solid electrolyte layer 30. The inactive member 40 may be separated from the anode layer 20, for example, the first anode active material layer 22. The inactive member 40 may extend to the end portion of the solid electrolyte layer 30 but may not be in contact with the anode layer 20. For example, the inactive member 40 may fill a space extending from one side surface of the cathode layer 10 to the end portion of the solid electrolyte layer 30.

Referring FIGS. 6 to 7, a width of the inactive member 40 extending from one side surface of the cathode layer 10 to the end portion of the solid electrolyte layer 30 may be, for example, in a range of about 1 % to about 30 %, about 1 % to about 25 %, about 1 % to about 20 %, about 1 % to about 15 %, about 1 % to about 10 %, or about 1 % to about 5 % of a width between one side surface of the cathode layer 10 and the other side surface opposite to the one side surface. If (e.g., when) the width of the inactive member 40 is excessively wide, the energy density of the solid secondary battery 1 may be reduced. If (e.g., when) the width of the inactive member 40 is excessively narrow, an effect of arranging the inactive member 40 may be insignificant.

The area of the cathode layer 10 may be smaller than the area of the solid electrolyte layer 30 in contact with the cathode layer 10. The inactive member 40 may be provided to surround the side surface of the cathode layer 10 to compensate for a difference in area between the cathode layer 10 and the solid electrolyte layer 30. The area of the inactive member 40 may compensate for the difference between the area of the cathode layer 10 layer and the area of the solid electrolyte layer 30, thereby effectively preventing or reducing cracks of the solid electrolyte layer 30 caused by a pressure difference during a pressing process. For example, the sum of the area of the cathode layer 10 and the area of the inactive member 40 may be equal to the area of the solid electrolyte layer 30. The solid electrolyte layer 30 may be, for example, a solid electrolyte layer.

The area of the cathode layer 10 may be, for example, less than 100 %, 99 % or less, 98 % or less, 97 % or less, 96 % or less, or 95 % or less of the area of the solid electrolyte layer 30. The area of the cathode layer 10 may be, for example, in a range of about 50 % to less than 100 %, about 50 % to about 99 %, about 55 % to about 98 %, about 60 % to about 97 %, about 70 % to about 96 %, about 80 % to about 95 %, or about 85 % to about 95 %.of the area of the solid electrolyte layer 30.

If (e.g., when) the area of the cathode layer 10 is greater than or equal to the area of the solid electrolyte layer 30, a short circuit may occur due to physical contact between the cathode layer 10 and the first anode active material layer 22, or a possibility of a short circuit occurring due to the overcharging of lithium may increase. The area of the cathode layer 10 may be, for example, equal to the area of the cathode active material layer 12. The area of the cathode layer 10 may be, for example, equal to the area of the cathode current collector 11.

The area of the inactive member 40 may be, for example, 50 % or less, 40 % or less, 30 % or less, 20 % or less, or 10 % or less of the area of the cathode layer 10. The area of the inactive member 40 may be, for example, in a range of about 1 % to about 50 %, about 5 % to about 40 %, about 5 % to about 30 %, about 5 % to about 20 %, or about 5 % to about 15 % of the area of the cathode layer 10.

An area S1 of the cathode layer 10 may be smaller than an area S4 of an anode current collector 21. The area S1 of the cathode layer 10 may be, for example, less than 100 %, 99 % or less, 98 % or less, 97 % or less, 96 % or less, or 95 % or less of the area S4 of the anode current collector 21. The area S1 of the cathode layer 10 may be, for example, in a range of about 50 % to less than 100 %, about 50 % to about 99 %, about 55 % to about 98 %, about 60 % to about 97 %, about 70 % to about 96 %, about 80 % to about 95 %, or about 85 % to about 95 % of the area S4 of the anode current collector 21. The area S4 of the anode current collector 21 may be, for example, equal to the area of the anode layer 20. The area S4 of the anode current collector 21 may be, for example, equal to the area of the first anode active material layer 22.

In the present disclosure, "equal" area, length, width, thickness, and/or shape may include all cases of having "substantially equal" area, length, width, thickness, and/or shape, excluding a case in which areas, lengths, widths, thicknesses, and/or shapes are intentionally different from each other. "Equal" area, length, width, and/or thickness includes a range in which the unintended difference in area, length, width, and/or thickness between compared objects is, for example, less than 3 %, less than 2 %, less than 1 %, less than 0.5 %, or less than 0.1 %.

The thickness of the inactive member 40 may be, for example, greater than the thickness of the first anode active material layer 22. The thickness of the first anode active material layer 22 may be, for example, 50 % or less, 40 % or less, 30 % or less, 20 % or less, or 10 % or less of the thickness of the inactive member 40. The thickness of the first anode active material layer 22 may be, for example, in a range of about 1 % to about 50 %, about 1 % to about 40 %, about 1 % to about 30 %, about 1 % to about 20 %, or about 1 % to about 10 % of the thickness of the inactive member 40.

The inactive member 40 may be a gasket. By utilizing the gasket as the inactive member 40, cracks of the solid electrolyte layer 30 caused by a pressure difference during a pressing process may be effectively suppressed or reduced.

The inactive member 40 may have, for example, a single-layer structure. In some embodiments, although not shown in the drawings, the inactive member 40 may have a multi-layer structure. In the inactive member 40 having the multi-layer structure, respective layers may have different compositions. The inactive member 40 having the multi-layer structure may have, for example, a two-layer structure, a three-layer structure, a four-layer structure, or a five-layer structure. The inactive member 40 having the multi-layer structure may include, for example, one or more adhesive layers and one or more support layers. For example, the adhesive layer may effectively prevent or reduce separation between the cathode layer 10 and the solid electrolyte layer 30 due to a change in volume of the cathode layer 10 which occurs during a charging/discharging process of the solid secondary battery 1 and may provide a binding force between the support layer and other layers to improve the film strength of the inactive member 40. The support layer may provide a supporting force to the inactive member 40, may prevent or reduce the nonuniformity of pressure applied to the solid electrolyte layer 30 during a pressing process or a charging/discharging process, and may prevent or reduce the shape deformation of the solid secondary battery 1 to be manufactured.

The inactive member 40 may be, for example, a flame-retardant inactive member. The flame-retardant inactive member may provide flame retardancy to prevent or reduce a possibility of thermal runaway and ignition of the solid secondary battery 1. In some embodiments, the safety of the solid secondary battery 1 may be further improved. The flame-retardant inactive member may be to absorb residual moisture in the solid secondary battery 1, thereby preventing or reducing the deterioration of the solid secondary battery 1 and improving the lifespan characteristics of the solid secondary battery 1.

The flame-retardant inactive member may include, for example, a matrix and a filler. The matrix may include, for example, a substrate and a reinforcing material. The matrix may include, for example, a fibrous substrate and a fibrous reinforcing material. The matrix may include the substrate to have elasticity. In some embodiments, the matrix may effectively accommodate a change in volume of the solid secondary battery 1 during charging/discharging and may be provided at any one of one or more suitable positions. The substrate included in the matrix may include, for example, a first fibrous material. By including the first fibrous material, the substrate may effectively accommodate a change in volume of the cathode layer 10 which occurs during a charging/discharging process of the solid secondary battery 1 and may effectively suppress or reduce the deformation of the inactive member 40 due to the change in volume of the cathode layer 10. The first fibrous material may be, for example, a material having an aspect ratio of 5 or more, 20 or more, or 50 or more. The first fibrous material may be, for example, a material having an aspect ratio of about 5 to about 1,000, about 20 to about 1,000, or about 50 to about 1,000. The first fibrous material may be, for example, an insulating material. The first fibrous material may be the insulating material, and thus a short circuit between the cathode layer 10 and the anode layer 20, which occur due to lithium dendrites and/or the like during charging/discharging of the solid secondary battery 1, may be effectively prevented or reduced. The first fibrous material may include, for example, at least one selected from among a pulp fiber, an insulating polymer fiber, and an ion conductive polymer fiber. The matrix may include the reinforcing material, and thus the strength thereof may be improved. In some embodiments, the matrix may prevent or reduce an excessive change in volume of the solid secondary battery 1 during changing/discharging and may prevent or reduce the deformation of the solid secondary battery 1. The reinforcing material included in the matrix may include, for example, a second fibrous material. The reinforcing material may include the second fibrous material, and thus the strength of the matrix may more uniformly increase. The second fibrous material may be, for example, a material having an aspect ratio of 3 or more, 5 or more, or 10 or more. The second fibrous material may be, for example, a material having an aspect ratio of about 3 to about 100, about 5 to about 100, or about 10 to about 100. The second fibrous material may be, for example, a flame-retardant material. The second fibrous material may be the flame-retardant material, and thus ignition due to thermal runaway occurring during a charging/discharging process of the solid secondary battery 1 or an external impact may be effectively suppressed or reduced. The second fibrous material may be, for example, a glass fiber, a metal oxide fiber, or a ceramic fiber.

The flame-retardant inactive member may include the filler in addition to the matrix. The filler may be provided in the matrix, on a surface of the matrix, or both (e.g., simultaneously) in the matrix and on the surface. The filler may include, for example, an inorganic material. The filler included in the flame-retardant inactive member may be, for example, a moisture getter. For example, the filler may adsorb moisture at a temperature of less than 100 °C to remove moisture remaining in the solid secondary battery 1, thereby preventing or reducing the deterioration of the solid secondary battery 1. In some embodiments, if (e.g., when) a temperature of the solid secondary battery 1 increases to 150 °C or more due to thermal runaway occurring during a charging/discharging process of the solid secondary battery 1 or an external impact, the filler may release the adsorbed moisture to effectively suppress or reduce ignition of the solid secondary battery 1. In other embodiments, the filler may be, for example, a flame retardant. The filler may be, for example, a metal hydroxide having moisture adsorption properties. The metal hydroxide included in the filler may be, for example, $Mg(OH)_2$, $Fe(OH)_3$, $Sb(OH)_3$, $Sn(OH)_4$, $Tl(OH)_3$, $Zr(OH)_4$, $Al(OH)_3$, or a combination thereof. The content (e.g., amount) of the filler included in the flame-retardant inactive member may be, for example, in a range of about 10 parts by weight to about 80 parts by weight, about 20 parts by weight to about 80 parts by weight, about 30 parts by weight to about 80 parts by weight, about 40 parts by weight to about 80 parts by weight, about 50 parts by weight to about 80 parts by weight, about 60 parts by weight to about 80 parts by weight, or about 65 parts by weight to about 80 parts by weight with respect to about 100 parts by weight of the flame-retardant inactive member.

The flame-retardant inactive member may further include, for example, a binder. The binder may include, for example, a curable polymer or a non-curable polymer. The curable polymer may be a polymer that is cured by heat and/or pressure. The curable polymer may be, for example, a solid at room temperature. The flame-retardant inactive member may include, for example, a heat-press curable film and/or a cured product thereof. A heat-press curable polymer of the heat-press curable film may be, for example, TSA-66 by Toray.

The flame-retardant inactive member may additionally include other materials in addition to the described substrate, reinforcing material, filler, and binder. The flame-retardant inactive member may further include, for example, at least one selected from among paper, an insulating polymer, an ion-conductive polymer, an insulating inorganic material, an oxide-based solid electrolyte, and a sulfide-based solid electrolyte. The insulating polymer may be, for example, an olefin-based polymer such as PP or PE.

The density of the substrate or the reinforcing material included in the flame-retardant inactive member may be, for example, in a range of about 10 % to about 300 %, about 10 % to about 150 %, about 10 % to about 140 %, about 10 % to about 130 %, or about 10 % to about 120 % of the density of the cathode active material included in the cathode active material layer 12.

The inactive member 40 may be a member that does not include an electrochemically active material, for example, an electrode active material. The electrode active material may be a material that absorbs/desorbs lithium. The inactive member 40 may be a member made of a material utilized in the art other than an electrode active material.

## Solid secondary battery

A solid secondary battery according to embodiments may include the described cathode layer, an anode layer, and an electrolyte layer provided between the cathode layer and the anode layer. The anode layer may include an anode current collector and a first anode active material layer provided on one surface of the anode current collector.

The anode layer may include the anode current collector and a lithium host layer provided on one surface of the anode current collector, wherein the lithium host layer includes a lithium host structure, the lithium host structure includes one or more lithium hosts, the lithium host includes a carbon-based lithium host, a metal-based lithium host, a polymer-based lithium host, or a combination thereof, and the solid secondary battery includes a first inactive member provided on one side surface of the anode layer.

The solid secondary battery may include a lithium-containing sulfide-based cathode active material as a cathode active material. In some embodiments, the interruption of an ion and/or electron transfer path, which is caused by an increase in volume of a lithium-free sulfide-based cathode active material, for example, sulfur (S) during initial discharging, may be prevented or reduced. The interruption of the ion and/or electron transfer path may be prevented or reduced to improve the cycle characteristics of the solid secondary battery.

The solid secondary battery may include the lithium host layer in the anode layer, and thus the lithium host may serve as a support during a process of precipitating a lithium metal in the anode layer, thereby suppressing the non-uniformity of lithium precipitation. The formation and growth of lithium dendrites and/or dead lithium may be suppressed or reduced during a charging/discharging process of the solid secondary battery. In some embodiment, the deterioration of the solid secondary battery may be suppressed or reduced, and the cycle characteristics thereof may be improved.

The solid secondary battery may include the lithium host layer in the anode layer, and thus a rapid change in volume of the anode layer may be suppressed or reduced during a charging/discharging process of the solid secondary battery. The rapid change in volume of the anode layer may be suppressed or reduced to suppress or reduce the deterioration of the solid secondary battery due to a change in volume of the solid secondary battery during a charging/discharging process and improve the cycle characteristics thereof.

The solid secondary battery may include a solid electrolyte layer, and thus polysulfide generated during charging/discharging of the lithium-containing sulfide-based cathode active material may be blocked from being moved to the anode layer. In some embodiments, a side reaction between polysulfide and an anode active material may be suppressed or reduced.

The first inactive member may be provided on one side surface of the anode layer, a short circuit between a cathode and lithium dendrites generated and grown during charging/discharging of the solid secondary battery and/or a lithium metal melting at a high temperature may be more effectively suppressed or reduced. In some embodiments, a short circuit of the solid secondary battery may be prevented or reduced, and the lifespan characteristics thereof may be improved.

Referring to FIGS. 3 to 7, the solid secondary battery 1 may include the cathode layer 10, the anode layer 20, and the solid electrolyte layer 30 provided between the cathode layer 10 and the anode layer 20. The anode layer 20 may include the anode current collector 21 and the first anode active material layer 22 provided on one surface of the anode current collector 21.

**Cathode**

A cathode may be defined as for the described cathode.

**Anode**

**Anode: Anode active material**

Referring to FIGS. 3 to 7, the anode layer 20 may include the first anode active material layer 22. The first anode active material layer 22 may include, for example, an anode active material and a binder.

The anode active material included in the first anode active material layer 22 may be, for example, an anode material that may form an alloy or compound with lithium.

The anode active material included in the first anode active material layer 22 may have, for example, a particle form. An average particle diameter of the anode active material having a particle form may be, for example, 4 $\mu$m or less, or less, 3 $\mu$m or less, 2 $\mu$m or less, 1 $\mu$m or less, 500 nm or less, 300 nm or less, or 100 nm or less. The average particle diameter of the anode active material having a particle form may be, for example, in a range of about 10 nm to about 4 $\mu$m, about 10 nm to about 3 $\mu$m, about 10 nm to about 2 $\mu$m, about 10 nm to about 1 $\mu$m, about 10 nm to about 500 nm, about 10 nm to about 300 nm, or about 10 nm to about 100 nm. The anode active material may be in the form of particles and have an average particle size (diameter) in such ranges, and thus the reversible absorbing and/or desorbing of lithium may be facilitated more easily during charging/discharging. The average particle diameter of the anode electrode active material may be, for example, a median diameter (D50) measured utilizing a laser type or kind particle size distribution meter.

The anode active material included in the first anode active material layer 22 may include, for example, at least one selected from a carbon-based anode active material and a metal or metalloid anode active material.

The carbon-based anode active material may include, for example, amorphous carbon, crystalline carbon, porous carbon, or a combination thereof.

The carbon-based anode active material may be, for example, amorphous carbon. Examples of the amorphous carbon may include carbon black (CB), acetylene black (AB), furnace black (FB), Ketjen black (KB), graphene, and/or the like, but one or more embodiments are not necessarily limited thereto. Any material classified as amorphous carbon in the art may be utilized. The amorphous carbon may be carbon that has no crystallinity or very low crystallinity and may be distinguished from crystalline carbon or graphite-based carbon.

The carbon-based anode active material may be, for example, porous carbon. A pore volume of the porous carbon may be, for example, in a range of about 0.1 cc/g to about 10.0 cc/g, about 0.5 cc/g to about 5 cc/g, or about 0.1 cc/g to about 1 cc/g. An average pore diameter of the porous carbon may be, for example, in a range of about 1 nm to about 50 nm, about 1 nm to about 30 nm, or about 1 nm to about 10 nm. A Brunauer-Emmett-Teller (BET) specific surface area of the porous carbon may be, for example, in a range of about 100 $m^2/g$ to about 3,000 $m^2/g$.

The metal or metalloid anode active material may include at least one selected from among gold (Au), platinum (Pt), palladium (Pd), silicon (Si), silver (Ag), aluminum (Al), bismuth (Bi), tin (Sn), and zinc (Zn), but one or more embodiments are not necessarily limited thereto. Any material, which is utilized as a metal anode active material or a metalloid anode active material and forms an alloy or compound with lithium in the art, may be utilized. For example, nickel (Ni) does not form an alloy with lithium and thus is not a metal anode active material.

The first anode active material layer 22 may include one type or kind of anode active material among such anode active materials or a mixture of a plurality of different anode active materials. For example, the first anode active material layer 22 may include only amorphous carbon or may include at least one selected from among gold (Au), platinum (Pt), palladium (Pd), silicon (Si), silver (Ag), aluminum (Al), bismuth. (Bi), tin (Sn), and zinc (Zn). In other embodiments, the first anode active material layer 22 may include a mixture of amorphous carbon and at least one selected from among gold (Au), platinum (Pt), palladium (Pd), silicon (Si), silver (Ag), aluminum (Al), bismuth. (Bi), tin (Sn), and zinc (Zn). A mixing ratio of the mixture of amorphous carbon and gold and/or the like may be, for example, in a range of about 99:1 to about 1:99, about 10:1 to about 1:2, about 5:1 to about 1:1, or about 4:1 to about 2:1 (based on weight), but one or more embodiments are not limited to such ranges. The mixing ratio may be selected according to the required characteristics of the solid secondary battery 1. The anode active material may have such a composition, and thus the cycle characteristics of the solid secondary battery 1 may be further improved.

The anode active material included in the first anode active material layer 22 may include, for example, a mixture of first particles made of amorphous carbon and second particles made of a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), and/or the like. In other embodiments, the metalloid may be a semiconductor. The content (e.g., amount) of the second particles may be in a range of about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt% with respect to the total weight of the mixture. The second particles may have a content (e.g., amount) in such ranges, and thus, for example, the cycle characteristics of the solid secondary battery 1 may be further improved.

In other embodiments, the first anode active material layer 22 may include a composite anode active material. The composite anode active material may include, for example, a carbon-based support and a metal-based anode active material supported on the carbon-based support. The composite anode active material may have such a structure so that the localization of the metal-based active material in the first anode active material layer 22 may be prevented or reduced, and the substantially uniform distribution thereof may be obtained. In some embodiments, the cycle characteristics of the solid secondary battery 1 including the first anode active material layer 22 may be further improved.

The metal-based anode active material supported on the carbon-based support may include, for example, a metal, a metal oxide, a composite of a metal and a metal oxide, or a combination thereof. Examples of the metal may include gold (Au), platinum (Pt), palladium (Pd), silicon (Si), silver (Ag), aluminum (Al), bismuth (Bi), tin (Sn), and tellurium (Te), zinc (Zn), and/or the like. Examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin ( Sn) oxide, tellurium (Te) oxide, zinc (Zn) oxide, and/or the like. The metal oxide may include, for example, $Au_xO_y$ (wherein $0<x\leq2$ and $0<y\leq3$), $Pt_xO_y$ (wherein $0<x\leq1$ and $0<y\leq2$), $Pd_xO_y$ (wherein $0<x\leq1$ and $0<y\leq1$), $Si_xO_y$ (wherein $0<x\leq1$ and $0<y\leq2$), $Ag_xO_y$ (wherein $0<x\leq2$ and $0<y\leq1$), $Al_xO_y$ (wherein $0<x\leq2$ and $0<y\leq3$), $Bi_xO_y$ (wherein $0<x\leq2$ and $0<y\leq3$), $Sn_xO_y$ (wherein $0<x\leq1$ and $0<y\leq2$), $Te_xO_y$ (wherein $0<x\leq1$ and $0<y\leq3$), $Zn_xO_y$ (wherein $0<x\leq1$ and $0<y\leq1$), or a combination thereof. The composite of the metal and the metal oxide may include, for example, a composite of Au and $Au_xO_y$ (wherein $0<x\leq2$ and $0<y\leq3$), a composite of Pt and $Pt_xO_y$ (wherein $0<x\leq1$ and $0<y\leq2$), a composite of Pd and $Pd_xO_y$ (wherein $0<x\leq1$ and $0<y\leq1$), a composite of Si and $Si_xO_y$ (wherein $0<x\leq1$ and $0<y\leq2$), a composite of Ag and $Ag_xO_y$ (wherein $0<x\leq2$ and $0<y\leq1$), a composite of Al and $Al_xO_y$ (wherein $0<x\leq2$ and $0<y\leq3$), a composite of Bi and $Bi_xO_y$ (wherein $0<x\leq2$ and $0<y\leq3$), a composite of Sn and $Sn_xO_y$ (wherein $0<x\leq1$ and $0<y\leq2$), a composite of Te and $Te_xO_y$ (wherein $0<x\leq1$ and $0<y\leq3$), a composite of Zn and $Zn_xO_y$ (wherein $0<x\leq1$ and $0<y\leq1$), or a combination thereof.

The carbon-based support may include, for example, amorphous carbon. Examples of the amorphous carbon may include CB, AB, FB, KB, graphene, activated carbon, CNFs, carbon nanotubes (CNTs), and/or the like, but one or more embodiments are not necessarily limited thereto. Any material classified as amorphous carbon in the art may be utilized. The amorphous carbon may be carbon that has no crystallinity or very low crystallinity and may be distinguished from crystalline carbon or graphite-based carbon. A carbonaceous material may be, for example, a carbon-based anode active material.

The composite anode active material may have, for example, a particle form. A particle diameter of the composite anode active material having a particle form may be, for example, in a range of about 10 nm to about 4 µm, about 10 nm to about 1 µm, about 10 nm to about 500 nm, about 10 nm to about 200 nm, or about 10 nm to about 100 nm. The composite anode active material may have a particle diameter in such ranges, and thus the reversible absorbing and/or desorbing of lithium may be more easily facilitated during charging/discharging. The metal-based anode active material supported on the carbon-based support may have, for example, a particle form. A particle diameter of the metal-based anode active material may be, for example, in a range of about 1 nm to about 200 nm, about 1 nm to about 150 nm, about 5 nm to about 100 nm, or about 10 nm to about 50 nm. The carbon-based support may have, for example, a particle form. A particle diameter of the carbon-based support may be, for example, in a range of about 10 nm to about 2 µm, about 10 nm to about 1 µm, about 10 nm to about 500 nm, about 10 nm to about 200 nm, or about 10 nm to about 100 nm. The carbon-based support may have a particle diameter in such ranges and thus may be more uniformly provided in the first anode active material layer 22. The carbon-based support may (be in the form of nanoparticles and) include, for example, nanoparticles having a particle diameter of 500 nm or less. The particle diameter of the composite anode active material, the particle diameter of the metal-based anode active material, and the particle diameter of the carbon-based support may each be, for example, an average particle diameter. The average particle diameter may be, for example, a median diameter (D50) measured utilizing laser type or kind particle size distribution meter. In other embodiments, the average particle size may be determined automatically by utilizing software, for example, from an electron microscope image or may be manually determined according to a manual.

**Anode: Binder**

The binder included in the first anode active material layer 22 is, for example, SBR, polytetrafluoroethylene, PVDF, PE, a vinylidene fluoride/hexafluoropropylene copolymer, polyacrylonitrile, polymethyl methacrylate, and/or the like, but one or more embodiments are not necessarily limited thereto. Any material usable as a binder in the art may be utilized. The binder may be provided as a single binder or a plurality of different binders.
The first anode active material layer 22 may include the binder and thus may be stabilized on the anode current collector 21. In some embodiments, cracks of the first anode active material layer 22 may be suppressed or reduced despite changes in a volume and/or relative position of the first anode active material layer 22 during a charging/discharging process. For example, if (e.g., when) the first anode active material layer 22 does not include a binder, the first anode active material layer 22 may be easily separated from the anode current collector 21. At a portion of the anode current collector 21 exposed due to the separation of the first anode active material layer 22 from the anode current collector 21, the anode current collector 21 may be in contact with the solid electrolyte layer 30, which may cause an increase in possibility of the occurrence of a short circuit. The first anode active material layer 22 may be formed, for example, by applying a slurry, in which a material constituting the first anode active material layer 22 is dispersed, onto the anode current collector 21 and drying the slurry. The first anode active material layer 22 may include the binder, and thus an anode active material may be stably distributed in a slurry. For example, if (e.g., when) the slurry is applied onto the anode current collector 21 through screen printing, the clogging of a screen (for example, clogging by aggregates of an anode active material) may be suppressed or reduced.

**Anode: Other additives**

The first anode active material layer 22 may further include additives utilized in the solid secondary battery 1, such as a filler, a coating agent, a dispersant, and an conductive adjuvant according to a related art.

**Anode: Solid electrolyte**

The first anode active material layer 22 may further include a solid electrolyte. The solid electrolyte may be, for example, a material selected from solid electrolytes included in the solid electrolyte layer 30. The solid electrolyte included in the first anode active material layer 22 may serve as a reaction point at which a lithium metal starts to be formed in the first anode active material layer 22, may serve as a space in which the formed lithium metal is stored, or may serve as a path for transferring lithium ions. The solid electrolyte may not be provided.
In the first anode active material layer 22, for example, the content (e.g., amount) of the solid electrolyte may be high in a region adjacent to the solid electrolyte layer 30 and may be low in a region adjacent to the anode current collector 21. The solid electrolyte in the first anode active material layer 22 may have, for example, a concentration gradient in which a concentration decreases from the region adjacent to the solid electrolyte layer 30 to the region adjacent to the anode current collector 21.

## Anode: First anode active material layer

A ratio B/A of an initial charge capacity B of the first anode active material layer 22 to an initial charge capacity A of the cathode active material layer 12 may be in a range of about 0.005 to about 0.45. The initial charge capacity of the cathode active material layer 12 may be determined from a 1st open circuit voltage (OCV) to a maximum charging voltage vs. $Li/Li^+$. The initial charge capacity of the first anode active material layer 22 may be determined at about 0.01 V vs. $Li/Li^+$ from a 2nd OCV.

The maximum charging voltage may be determined by types (kinds) of cathode active materials. The maximum charging voltage may be, for example, about 1.5 V, about 2.0 V, about 2.5 V, about 3.0 V, about 3.5 V, about 4.0 V, about 4.2 V, or about 4.3 V. For example, the maximum charging voltage for $Li_2S$ or a $Li_2S$ composite may be about 2.5 V vs. Li/Li+. For example, the maximum charging voltage for $Li_2S$ or the $Li_2S$ composite may be about 3.0 V vs. Li/Li+. The ratio B/A of the initial charge capacity B of the first anode active material layer 22 to the initial charge capacity A of the cathode active material layer 12 may be, for example, in a range of about 0.01 to about 0.3, about 0.01 to about 0.2, or about 0.05 to about 0.1. The initial charge capacity (mAh) of the cathode active material layer 12 may be obtained by multiplying a charge specific capacity (mAh/g) of the cathode active material by a mass (g) of the cathode active material in the cathode active material layer 12. If (e.g., when) one or more suitable types (kinds) of cathode active materials are utilized, a value of specific charge capacity×mass may be calculated for each cathode active material, and the sum of the values may be the initial charge capacity of the cathode active material layer 12. The initial charge capacity of the first anode active material layer 22 may be also calculated in substantially the same manner. The initial charge capacity of the first anode active material layer 22 may be obtained by multiplying a charge specific capacity (mAh/g) of the anode active material by a mass of the anode active material in the first anode active material layer 22. If (e.g., when) one or more suitable types (kinds) of anode active materials are utilized, a value of specific charge capacity×mass may be calculated for each anode active material, and the sum of the values may be the initial charge capacity of the anode active material layer 22. The specific charge capacity of each of the cathode active material and the anode active material may be measured by utilizing a solid half-cell that uses a lithium metal as a counter electrode. The initial charge capacity of each of the cathode active material layer 12 and the first anode active material layer 22 may be directly measured by utilizing a solid half-cell at a constant current density, for example, about 0.1 $mA/cm^2$. For a cathode, the measurement may be performed on an operating voltage from a 1st OCV up to a maximum charging voltage of, for example, about 3.0 V (vs. $Li/Li^+$). For an anode, the measurement may be performed on an operating voltage from a 2nd OCV up to about 0.01 V for the anode, for example, a lithium metal. For example, a solid half-cell including the cathode active material layer 12 may be charged at a constant current of 0.1 $mA/cm^2$ from a 1st OCV up to about 3.0 V, and a solid half-cell including the first anode active material layer 22 may be charged at a constant current of 0.1 $mA/cm^2$ from a 2nd OCV up to about 0.01 V. A current density during constant current charging may be, for example, about 0.2 $mA/cm^2$ or about 0.5 $mA/cm^2$. The solid half-cell including the cathode active material layer 12 may be charged, for example, from a 1st OCV up to about 2.5 V, about 2.0 V, about 3.5 V, or about 4.0 V. A maximum charging voltage of a cathode active material layer may be determined by a maximum voltage of a battery that satisfies the safety conditions according to JIS C 8712:2015 of the Japanese Standards Association.

If (e.g., when) the initial charge capacity of the first anode active material layer 22 is excessively low, the first anode active material layer 22 may become very thin, and thus, during a repeated charging/discharging process, lithium dendrites formed between the first anode active material layer 22 and the anode current collector 21 may collapse the first anode active material layer 22, which may make it difficult to improve the cycle characteristics of the solid secondary battery 1. If (e.g., when) the charge capacity of the first anode active material layer 22 excessively increases, the energy density of the solid secondary battery 1 may decrease, and the internal resistance of the solid secondary battery 1 due to the first anode active material layer 22 may increase, which may make it difficult to improve the cycle characteristics of the solid secondary battery 1.

The thickness of the first anode active material layer 22 may be, for example, 50 % or less, 40 % or less, 30 % or less, 20 % or less, 10 % or less, or 5 % or less of the thickness of the cathode active material layer 12. The thickness of the first anode active material layer 22 may be, for example, in a range of about 1 % to about 50 %, about 1 % to about 40 %, about 1 % to about 30 %, about 1 % to about 20 %, about 1 % to about 10 %, or about 1 % to about 5 % of the thickness of the cathode active material layer 12. The thickness of the first anode active material layer 22 may be, for example, in a range of about 1 $\mu$m to about 20 $\mu$m, about 2 $\mu$m to about 15 $\mu$m, or about 3 $\mu$m to about 10 $\mu$m. If (e.g., when) the first anode active material layer 22 is excessively thin, lithium dendrites formed between the first anode active material layer 22 and the anode current collector 21 may collapse the first anode active material layer 22, which may make it difficult to improve the cycle characteristics of the solid secondary battery 1. If (e.g., when) the thickness of the first anode active material layer 22 excessively increases, the energy density of the solid secondary battery 1 may decrease, and the internal resistance of the solid secondary battery 1 due to the first anode active material layer 22 may increase, which may make it difficult to improve the cycle characteristics of the solid secondary battery 1. If (e.g., when) the thickness of the first anode active material layer 22 decreases, for example, the initial charge capacity of the first anode active material layer 22 may also decrease.

### Anode: Second anode active material layer

Referring to FIG. 5, the solid secondary battery 1 may further include a second anode active material layer 24 which, after charging, is provided between the anode current collector 21 and the first anode active material layer 22. The second anode active material layer 24 may be a metal layer including lithium or a lithium alloy. The metal layer may include the lithium or the lithium alloy. In some embodiments, the second anode active material layer 24 may be the metal layer including lithium and thus may serve, for example, as a lithium reservoir. Examples of the lithium alloy may include a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but one or more embodiments are not limited to. Any material utilized as a lithium alloy in the art may be utilized. The second anode active material layer 24 may be made of one of such alloys or lithium or may be made of one or more suitable types (kinds) of alloys. The second anode active material layer 24 may be, for example, a plated layer. For example, the second anode active material layer 24 may be plated between the first anode active material layer 22 and the anode current collector 21 during a charging process of the solid secondary battery 1.

The thickness of the second anode active material layer 24 is not limited, but may be, for example, in a range of about 1 $\mu$m to about 500 $\mu$m, about 1 $\mu$m to about 200 $\mu$m, about 1 $\mu$m to about 150 $\mu$m, about 1 $\mu$m to about 100 $\mu$m, or about 1 $\mu$m to about 50 $\mu$m. If (e.g., when) the second anode active material layer 24 is excessively thin, it is difficult for the second anode active material layer 24 to function as a lithium reservoir. If (e.g., when) the second anode active material layer 24 is excessively thick, the mass and volume of the solid secondary battery 1 may be increased, and the cycle characteristics of the solid secondary battery 1 may be actually degraded.

In other embodiments, in the solid secondary battery 1, for example, before assembly of the solid secondary battery 1, the second anode active material layer 24 may be provided between the anode current collector 21 and the first anode active material layer 22. If (e.g., when) the second anode active material layer 24 is provided between the anode current collector 21 and the first anode active material layer 22 before the assembly of the solid secondary battery 1, the second anode active material layer 24 may be the metal layer including lithium and thus may server as a lithium reservoir. For example, before the assembly of the solid secondary battery 1, lithium foil may be provided between the anode current collector 21 and the first anode active material layer 22.

If (e.g., when) the second anode active material layer 24 is plated by the solid secondary battery 1 being charged after being assembled, the solid secondary battery 1 may not include (e.g., may exclude) the second anode active material layer 24 if (e.g., when) the solid secondary battery 1 is assembled, and thus the energy density of the solid secondary battery 1 may increase. During charging of the solid secondary battery 1, the first anode active material layer 22 may be charged beyond a charge capacity thereof. The first anode active material layer 22 may be then overcharged. At the beginning of charging, lithium may be adsorbed in the first anode active material layer 22. The anode active material included in the first anode active material layer 22 may form an alloy or compound with lithium ions that move from the cathode layer 10. If (e.g., when) charging is performed beyond a capacity of the first anode active material layer 22, for example, lithium may be precipitated on a rear surface of the first anode active material layer 22, for example, between the anode current collector 21 and the first anode active material layer 22, and a metal layer corresponding to the second anode active material layer 24 may be formed by the precipitated lithium. The second anode active material layer 24 may be a metal layer mainly made of lithium (for example, metallic lithium). Such a result is obtained, for example, because the anode active material included in the first anode active material layer 22 includes a material that forms an alloy or compound with lithium. During discharging, lithium in the first anode active material layer 22 and the second anode active material layer 24, for example, lithium in the metal layer, may be ionized to move toward the cathode layer 10. In some embodiments, in the solid secondary battery 1, lithium may be utilized as an anode active material. In some embodiments, the first anode active material layer 22 may cover the second anode active material layer 24, thereby serving as a protective layer for the second anode active material layer 24, for example, the metal layer, and concurrently (e.g., simultaneously) serving to suppress or reduce the precipitation growth of lithium dendrites. In some embodiments, a short circuit and a reduction in capacity of the solid secondary battery 1 may be suppressed or reduced, thereby improving the cycle characteristics of the solid secondary battery 1. In other embodiments, if (e.g., when) the second anode active material layer 24 is provided if e.g., when) the solid secondary battery 1 is charged after being assembled, the anode layer 20, for example, the anode current collector 21, the first anode active material layer 22, and a region therebetween, may be Li-free regions that do not include lithium (Li) in an initial state of the solid secondary battery 1 or in a state after full discharging thereof.

### Anode: Anode current collector

The anode current collector 21 may be made of a material that does not react with lithium, for example, a material that does not form both (e.g., simultaneously) an alloy and a compound with lithium. Examples of a material constituting the anode current collector 21 may include copper (Cu), stainless steel, titanium (Ti), iron (Fe), cobalt (Co), and nickel (Ni), but one or more embodiments are not necessarily limited thereto. Any material utilized as an electrode current collector in the art may be utilized. The anode current collector 21 may be made of one of the described metals or an alloy or coating material of two or more metals. The anode current collector 21 may be, for example, in the form of a plate or foil.

Referring to FIG. 4, the solid secondary battery 1 may further include a thin film 23, which includes an element capable of forming an alloy with lithium, on one surface of the anode current collector 21. The thin film 23 may be provided between the anode current collector 21 and the first anode active material layer 22. The thin film 23 may include, for example, an element capable of forming an alloy with lithium. Examples of the element capable of forming an alloy with lithium may include gold, silver, zinc, tin, indium, silicon, aluminum, bismuth, and/or the like, but one or more embodiments are not necessarily limited thereto. Any material capable of forming an alloy with lithium in the art may be utilized. The thin film 23 may be made of one of such metals or an alloy of one or more suitable types (kinds) of metals. The thin film 23 may be provided on one surface of the anode current collector 21 so that, for example, a plated form of the second anode active material layer 24 plated between the thin film 23 and the first anode active material layer 22 may be further planarized, and the cycle characteristics of the solid secondary battery 1 may be further improved.

The thickness of the thin film 23 may be, for example, in a range of about 1 nm to about 800 nm, about 10 nm to about 700 nm, about 50 nm to about 600 nm, or about 100 nm to about 500 nm. If (e.g., when) the thickness of the thin film 23 is less than 1 nm, it may be difficult for the thin film 23 to function. If (e.g., when) the film 23 is excessively thick, the thin film 23 itself may adsorb lithium, and thus an amount of lithium precipitated at the anode layer 20 may decrease, resulting in a decrease in energy density of the solid secondary battery 1 and a decrease in cycle characteristics of the solid secondary battery 1. The thin film 23 may be provided on the anode current collector 21 through, for example, vacuum deposition, sputtering, plating, and/or the like, but one or more embodiments are not necessarily limited to such a method. Any method capable of forming the thin film 23 in the art may be utilized.

In one or more embodiments, the anode current collector 21 may include, for example, a base film and a metal layer provided on at least one surface (e.g., one surface or two surfaces) of the base film. The base film may include, for example, a polymer. The polymer may be, for example, a thermoplastic polymer. The polymer may include, for example, polyethylene terephthalate (PET), PE, polypropylene (PP), polybutylene terephthalate (PBT), polyimide (PI), or a combination thereof. The polymer may be an insulating polymer. The base film may include an insulating thermoplastic polymer, and thus if (e.g., when) a short circuit occurs, the base film may soften or liquefy to interrupt the operation of a battery, thereby suppressing a rapid increase in current. The metal layer may include, for example, copper (Cu), stainless steel, titanium (Ti), iron (Fe), cobalt (Co), nickel (Ni), and/or an alloy thereof. The anode current collector 21 may additionally include a metal chip and/or a lead tab. The base film, metal layer, metal chip, and lead tab of the anode current collector 21 may be defined as for the described cathode current collector 11. The anode current collector 21 may have such a structure, the weight of an anode may be reduced, thereby improving the energy density of the anode and a lithium battery.

### Electrolyte layer

### Electrolyte layer: Electrolyte

Referring to FIGS. 1 to 6, the solid electrolyte layer 30 may include an electrolyte provided between the cathode layer 10 and the anode layer 20. The electrolyte may include, for example, a solid electrolyte, a gel electrolyte, or a combination thereof.

The solid electrolyte may include, for example, a sulfide-based solid electrolyte, an oxide-based solid electrolyte, a polymer solid electrolyte, or a combination thereof.

The solid electrolyte may be, for example, a sulfide-based solid electrolyte. The sulfide-based solid electrolyte may include, for example, at least one selected from among $Li_2S-P_2S_5$, $Li_2S-P_2S_5-LiX$ (wherein X is a halogen element) $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (wherein m and n are each a positive number and Z is one of Ge, Zn, and Ga), $Li_2S-GeS_2$, $Li_2S-SiS_2-Li_3PO_4$, $Li_2S-SiS_2-Li_pMO_q$ (wherein p and q are each a positive number and M is one of P, Si, Ge, B, Al, Ga, and In), $Li_{7-x}PS_{6-x}Cl_x$ (wherein 0<x<2), $Li_{7-x}PS_{6-x}Br_x$ (wherein 0<x<2), and $Li_{7-x}PS_{6-x}I_x$ (wherein 0≤x≤2). The sulfide-based solid electrolyte may be prepared by treating a starting material such as $Li_2S$ or $P_2S_5$ through melt quenching or mechanical milling. For example, after such treating, heat treatment may be performed. The solid electrolyte may be in an amorphous state, a crystalline state, or a mixture state thereof. In some embodiments, the solid electrolyte may be, for example, a material that includes at least of sulfur (S), phosphorus (P), and/or lithium (Li) as constituent elements among the described materials of the sulfide-based solid electrolyte. For example, the solid electrolyte may be a material including $Li_2S-P_2S_5$. If (e.g., when) a material including $Li_2S-P_2S_5$ is utilized as a sulfide-based solid electrolyte material for forming the solid electrolyte, a mixing molar ratio of $Li_2S$ to $P_2S_5$, for example, $Li_2S:P_2S_5$, may be in a range of about 20:80 to about 90:10, about 25:75 to about 90:10, about 30:70 to about 70:30, or about 40:60 to 60:40.

The sulfide-based solid electrolyte may include, for example, an argyrodite-type or kind solid electrolyte represented by Formula 1:

Formula 1          $Li^+_{12-n-x}A^{n+}X^{2-}_{6-x}Y^-_x$

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or $N_3$, $1 \leq n \leq 5$, and $0 \leq x \leq 2$. The sulfide-based solid electrolyte may be, for example, an argyrodite-type or kind compound including at least one selected from among $Li_{7-x}PS_{6-x}Cl_x$ (wherein $0 \leq x \leq 2$), $Li_{7-x}PS_{6-x}Br_x$ (wherein $0 \leq x \leq 2$), and $Li_{7-x}PS_{6-x}I_x$ (wherein $0 \leq x \leq 2$). The sulfide-based solid electrolyte may be, for example, an argyrodite-type or kind compound including at least one selected from among $Li_6PS_5Cl$, $Li_6PS_5Br$, and $Li_6PS_5I$.

The argyrodite-type or kind solid electrolyte may have a density of about 1.5 g/cc to about 2.0 g/cc. The argyrodite-type or kind solid electrolyte may have a density of 1.5 g/cc or more so that the internal resistance of a solid secondary battery may be reduced, and Li may be effectively suppressed or reduced from penetrating an electrolyte layer.

The oxide-based solid electrolyte may include, for example, $Li_{1+x+y}Al_xTi_{2-x}Si_yP_{3-y}O_{12}$ (wherein $0<x<2$ and $0 \leq y<3$), $BaTiO_3$, $Pb(Zr,Ti)O_3(PZT)$, $Pb_{1-x}La_xZr_{1-y}Ti_yO_3$ (PLZT) (wherein $0 \leq x<1$ and $0 \leq y<1$), $PB(Mg_3Nb_{2/3})O_3$-$PbTiO_3$ (PMN-PT), $HfO_2$, $SrTiOs$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (wherein $0<x<2$ and $0<y<3$), $Li_xAl_yTi_z(PO_4)_3$ (wherein $0<x<2$, $0<y<1$, and $0<z<3$), $Li_{1+x+y}(Al, Ga)_x(Ti, Ge)_{2-x}Si_yP_{3-y}O_{12}$ (wherein $0 \leq x \leq 1$ and $0 \leq y \leq 1$), $Li_xLa_yTiO_3$ (wherein $0<x<2$ and $0<y<3$), $Li_2O$, $LiOH$, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ (wherein M=Te, Nb, or Zr and $0 \leq x \leq 10$), or a combination thereof. The oxide-based solid electrolyte may be prepared, for example, through sintering and/or the like.

The oxide-based solid electrolyte may be, for example, a garnet-type or kind solid electrode selected from $Li_7La_3Zr_2O_{12}$ (LLZO) and $Li_{3+x}La_3Zr_{2-a}M_aO_{12}$ (LLZO dopped with M) (wherein M=Ga, W, Nb, Ta, or Al, $0<a<2$, and $0 \leq x \leq 10$).

For example, the polymer solid electrolyte may include a mixture of a lithium salt and a polymer or may include a polymer having an ion-conductive functional group. The polymer solid electrolyte may be, for example, a polymer electrolyte that is in a solid state at a temperature of about 25 °C at a pressure of about 1 atm. The polymer solid electrolyte may not include (e.g., may exclude), for example, a liquid. The polymer solid electrolyte may include a polymer, and the polymer may include, for example, polyethylene oxide (PEO), PVDF, vinylidene fluoride-hexafluoropropylene (PVDF-HFP), a poly(styrene-b-ethylene oxide) block or reduce copolymer (PS-PEO), poly(styrene-butadiene), poly(styrene-isoprene-styrene), a poly(styrene-b-divinylbenzene) block or reduce copolymer, a poly(styrene-ethylene oxide-styrene) block or reduce copolymer, polystyrene sulfonate (PSS), polyvinyl fluoride (PVF), poly(methylmethacrylate) (PMMA), polyethylene glycol (PEG), polyacrylonitrile (PAN), polytetrafluoroelene (PTFE), polyethylenedioxythiophene (PEDOT), polypyrrole (PPY), polyacrylonitrile (PAN), polyaniline, poly acetylene, NAFION™ AQUIVION®, FLEMION®, GORE™, ACIPLEX™, MORGANE®-ADP, sulfonated poly(ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi⁺), or a combination thereof, but one or more embodiments are not limited thereto. Any material utilized in a polymer electrolyte in the art may be utilized. As the lithium salt, any material may be utilized as long as the material is usable as a lithium salt in the art. The lithium salt may include, for example, $LiPF_6$, $LiBF_4$, $LiSbF_6$, $LiAsF_6$, $LiClO_4$, $LiCFsSOs$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x and y are each a natural number from 1 to 20), $LiCl$, $LiI$, or a mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1,000 Dalton or more, 10,000 Dalton or more, 100,000 Dalton or more, or 1,000,000 Dalton or more.

The gel electrolyte may be, for example, a polymer gel electrolyte. The gel electrolyte may have a gel state without including, for example, a polymer.

The polymer gel electrolyte may include, for example, a liquid electrolyte and a polymer or may include an organic solvent and a polymer having an ion-conductive functional group. The polymer gel electrolyte may be, for example, a polymer electrolyte that is in a gel state at a temperature of about 25 °C at a pressure of about 1 atm. The polymer gel electrolyte may have, for example, a gel state without including a liquid. The liquid electrolyte utilized in the polymer gel electrolyte may include, for example, a mixture of an ionic liquid, a lithium salt, and an organic solvent, a mixture of a lithium salt and an organic solvent, or a mixture of an ionic liquid and an organic solvent. The polymer utilized in the polymer gel electrolyte may be selected from polymers utilized in a solid polymer electrolyte. The organic solvent may be selected from organic solvents utilized in a liquid electrolyte. The lithium salt may be selected from lithium salts utilized in a polymer solid electrolyte. The ionic liquid may refer to a salt in a liquid state at room temperature or a room-temperature molten salt that has a melting point at room temperature or less and includes (e.g., consists of) only ions. The ionic liquid may include, for example, a compound including a) one cation selected from among an ammonium-based cation, a pyrrolidinium-based cation, pyridinium-based cation, a pyrimidinium-based cation, an imidazolium-based cation, a piperidinium-based cation, a pyrazolium-based cation, an oxazolium-based cation, a pyridazinium-base cation, a phosphonium-based cation, a sulfonium-based cation, a triazol-based cation, and a mixture thereof, and b) at least one anion selected from among $BF_4$-,

$PF_6^-$, $AsF_6^-$, $SbF_6^-$, $AlCl_4^-$, $HSO_4^-$, $ClO_4^-$, $CH_3SO_3^-$, $CF_3CO_2^-$, Cl-, Br-, I-, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. The polymer solid electrolyte may be impregnated, for example, in a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. A weight average molecular weight of the polymer included in the polymer gel electrolyte may be, for example, 500 Dalton or more, 1,000 Dalton or more, 10,000 Dalton or more, 100,000 Dalton or more, or 1,000,000 Dalton or more.

**Electrolyte layer: binder**

The solid electrolyte layer 30 may include, for example, a binder. The binder included in the solid electrolyte layer 30 may include, for example, SBR, polytetrafluoroethylene, PVDF, PE, and/or the like, but one or more embodiments are not limited thereto. Any material utilized as a binder in the art may be utilized. The binder of the solid electrolyte layer 30 may be the same as or different from the binder included in the cathode active material layer 12 and the first anode active material layer 22. The binder may not be provided.

The content (e.g., amount) of the binder included in the solid electrolyte layer 30 may be in a range of about 0.1 wt% to about 10 wt%, about 0.1 wt% to about 5 wt%, about 0.1 wt% to about 3 wt%, about 0.1 wt% to about 1 wt%, about 0 wt% to about 0.5 wt%, or about 0 wt% to about 0.1 wt%.

Referring to FIG. 6, the anode layer 20 may include the anode current collector 21 and a lithium host layer 22 provided on one surface of the anode current collector 21. A first inactive member 42 may be provided on one side surface of the anode layer 20.

The first inactive member 42 may be provided on one side surface of the lithium host layer 22 and may be provided between the solid electrolyte layer 30 and the anode current collector 21 opposite to the solid electrolyte layer 30. The second inactive member 42 may not be provided on one side surface of the anode current collector 21. Referring to FIG. 6, the first inactive member 42 may be provided on one side surface of each of the lithium host layer 22 and the anode current collector 21. The first inactive member 42 may be included to more effectively prevent or reduce a short circuit between a lithium metal plated in the lithium host layer 22 and the cathode layer 10 during charging/discharging of the solid secondary battery 1, thereby improving the cycle characteristics of the solid secondary battery 1. The first inactive member 42 may be provided to prevent or reduce cracks of the solid electrolyte layer 30 during manufacturing and/or charging/discharging of the solid secondary battery 1, thereby improving the cycle characteristics of the solid secondary battery 1. In the solid secondary battery 1 that does not include the first inactive member 42, ununiform pressure may be applied to the solid electrolyte layer 30 in contact with the anode layer 20 during manufacturing and/or charging/discharging of the solid secondary battery 1 to cause cracks in the solid electrolyte layer 30, and a lithium metal may be grown through the cracks to increase a possibility of the occurrence of a short circuit.

Referring to FIGS. 3 to 7, in the solid secondary battery 1, a thickness T2 of the first inactive member 42 may be substantially equal to a thickness T1 of the lithium host layer 22. The sum of the thickness T2 of the first inactive member 42 and a thickness T4 of the anode current collector 21 may be substantially equal to a thickness T3 of the anode layer 20, and thus substantially uniform pressure may be applied between the anode layer 20 and the solid electrolyte layer 30, and the anode layer 20 and the solid electrolyte layer 30 may be in sufficiently close contact with each other to reduce interface resistance between the anode layer 20 and the solid electrolyte layer 30. In some embodiments, the solid electrolyte layer 30 may be sufficiently sintered during a process of pressing and manufacturing the solid secondary battery 1, thereby reducing the internal resistance of the solid electrolyte layer 30 and the solid secondary battery 1 including the same.

In FIG. 8, 41 denotes a second inactive member.

The inactive member may be an elastic member.

A method of manufacturing a solid secondary battery according to embodiments will be described.

A solid secondary battery according to embodiments may be manufactured through a method including performing first milling of $M_2S$ and an alkali metal salt, adding an inorganic electronic-conductive structure to a milled product and performing secondary milling to obtain a composite, preparing a cathode by utilizing a composition obtained by adding and a binder to the composite and mixing the binder with the composite, and arranging an electrolyte between the cathode and the anode.

In obtaining of the composite, a carbon-based material may be further added to the composition.

A solid electrolyte may be added to the composition.

The solid electrolyte may be a sulfide-based solid electrolyte. The size of the sulfide-based solid electrolyte may be in a range of about 0.1 nm to about 10 $\mu$m, for example, about 100 nm to about 3 $\mu$m.

The sulfide-based solid electrolyte may include at least one selected from among $Li_2S-P_2S_5$, $Li_2S-P_2S_5-LiX$ (wherein X is a halogen element), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (wherein m and n are each a positive number and Z is one of Ge, Zn, and Ga), $Li_2S-GeS_2$, $Li_2S-SiS_2-Li_3PO_4$, $Li_2S-SiS_2-Li_pMO_q$ (wherein p and q are each a positive number and M is one of P, Si, Ge, B, Al, Ga, and In), $Li_{7-x}PS_{6-x}Cl_x$ (wherein 0<x<2), $Li_{7-x}PS_{6-x}Br_x$ (wherein 0<x<2), and $Li_{7-x}PS_{6-x}I_x$ (wherein 0≤x≤2). The sulfide-based solid electrolyte may include an argyrodite-type or kind solid electrolyte, The argyrodite-type or kind solid electrolyte may include at least one selected from among $Li_6PS_5Cl$, $Li_6PS_5Br$, and LisPSsI,

The argyrodite-type or kind solid electrolyte may have a density of about 1.5 g/cc to about 2.0 g/cc.

In the obtaining of the composite, a carbon-based material may be further added to the composition. The carbon-based material may include CNFs and/or the like.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

The present disclosure will be described in more detail through the following Examples and Comparative Examples. However, Examples are for illustrative purposes only, and the scope of the present disclosure is not limited by Examples.

In the following examples, "SE" denotes a solid electrolyte utilized in a cathode mixture to be described and a content (e.g., amount) thereof, and % represents wt%.

## EXAMPLES

**Preparation of composite cathode active material**

**Example 1: 30 % Li$_2$S-20 % LiI-7.5 % MoS$_2$+42.5 % SE, two-stage process**

**First stage**

Li$_2$S and LiI were mixed at a weight ratio of 30:20. The obtained mixture was mechanically milled by utilizing a ball mill to prepare a Li$_2$S-LiI composite. Milling conditions included a temperature of 25 °C, a speed of 600 rpm, and 10 hours.

**Second stage**

The Li$_2$S-LiI composite and a plate-shaped MoS$_2$ (manufactured by Sigma-Aldrich Co. Ltd.) were mixed at a weight ratio of 50:7.5. The MoS$_2$ has a plate-like shape, and the plate-shaped MoS$_2$ has a length (X direction) (average length) of about 30 μm, a thickness (Z direction) (average thickness) of about 5 μm, and a width (Y direction) (average width) of about 15 μm. The obtained mixture was mechanically milled by utilizing a ball mill to prepare a Li$_2$S-LiI-MoS$_2$ composite. Milling conditions included a temperature of 25 °C, a speed of 600 rpm, and 5 hours. The Li$_2$S-LiI-MoS$_2$ composite was utilized as a composite cathode active material.

**Example 2: 30 % Li$_2$S-20 % LiI-7.5 % VO$_2$+42.5 % SE, two-stage process**

A Li$_2$S-LiI-VO$_2$ composite was prepared in substantially the same manner as in Example 1, except that VO$_2$ in a spherical particle state was utilized instead of plate-shaped MoS$_2$.

**Example 2-1**

A Li$_2$S-LiI-VO$_2$ composite was prepared in substantially the same manner as in Example 2, except that VO$_2$ having the form of fiber was utilized instead of VO$_2$ in a spherical particle state.

**Example 3: 30 % Li$_2$S-20 % LiI-7.5 % TiS$_2$+42.5 % SE, two-stage process**

A Li$_2$S-LiI-TiS$_2$ composite was prepared in substantially the same manner as in Example 1, except that plate-shaped TiS$_2$ was utilized instead of plate-shaped MoS$_2$.

**Example 4: 30 % Li$_2$S-20 % LiI-7.5 % WS$_2$+42.5 % SE, two-stage reaction**

A Li$_2$S-LiI-WS$_2$ composite was prepared in substantially the same manner as in Example 1, except that plate-shaped WS$_2$ was utilized instead of plate-shaped MoS$_2$, and a mixing weight ratio of a Li$_2$S-LiI composite and WS$_2$ was changed into a weight ratio of 50:7.5.

**Example 5: 30 % Li$_2$S-20 % LiI-7.5 % ZrS$_2$+42.5 % SE, two-stage reaction**

A Li$_2$S-LiI-ZrS$_2$ composite was prepared in substantially the same manner as in Example 1, except that plate-shaped ZrS$_2$ was utilized instead of plate-shaped MoS$_2$.

**Comparative Example 1: Li$_2$S-LiI-CNF, 510 rpm, 10 hours, two-stage process, 20 G (KR 2017-0068448 (Tatsu-misago))**

**First stage**

Li$_2$S and LiI were mixed at a weight ratio of 30:20 to prepare a first mixture. The first mixture was mechanically milled by utilizing a ball mill to prepare a Li$_2$S-LiI composite.
Milling conditions included a temperature of 25 °C, a speed of 510 rpm, and 10 hours. Milling energy applied to a sample during milling was 20 G.

**Second stage**

The Li$_2$S-LiI composite and CNFs were mixed at a weight ratio of 50:10 to prepare a second mixture. The second mixture was mechanically milled by utilizing a ball mill to prepare a Li$_2$S-LiI-CNF composite.
Milling conditions included a temperature of 25 °C, a speed of 510 rpm, and 10 hours. Milling energy applied to a sample during milling was 20 G. Li$_2$S-LiI-CNF composite was utilized as a composite cathode active material.

**Comparative Example 2: 30 % Li$_2$S-20 % LiI-7.5 % SiO$_2$+42.5 % SE**

A composite cathode active material was prepared in substantially the same manner as in Example 1, except that a SiO$_2$ fiber was utilized instead of plate-shaped MoS$_2$. The SiO$_2$ fiber was a non-conductive inorganic material, and it was difficult to prepare a cathode layer with a effect of the composite cathode active material according to Example 1 by utilizing the SiO$_2$ fiber.

**Comparative Example 3: 30 % Li$_2$S+20 % LiI+7.5 % MoS$_2$ simple blend**

Li$_2$S, LiI, and MoS$_2$ were mixed at a weight ratio of 30:20:7.5. The obtained mixture was utilized as a cathode active material without any change.

**Comparative Example 4: Li$_2$S-MoS$_2$-LiI composite (30 % Li$_2$S-7.5 % MoS$_2$-20 % LiI+42.5 % SE)**

**First stage**

Li$_2$S and MoS$_2$ were mixed at a weight ratio of 30:7.5. The obtained mixture was mechanically milled by utilizing a ball mill to prepare a Li$_2$S-MoS$_2$ composite. Milling conditions included a temperature of 25 °C, a speed of 600 rpm, and 5 hours.

**Second stage**

A Li$_2$S-MoS$_2$ composite and LiI were mixed at a weight ratio of 37.5:20. The obtained mixture was mechanically milled by utilizing a ball mill to prepare a Li$_2$S-MoS$_2$-LiI composite. Milling conditions included a temperature of 25 °C, a speed of 600 rpm, and 10 hours. Li$_2$S-MoS$_2$-LiI composite was utilized as a composite cathode active material.

**Comparative Example 5: 30 % Li$_2$S-20 % LiI+7.5 % MoS$_2$ simple blend**

Li$_2$S and LiI were mixed at a weight ratio of 30:20. The obtained mixture was mechanically milled by utilizing a ball mill to prepare a Li$_2$S-LiI composite. Milling conditions included a temperature of 25 °C, a speed of 600 rpm, and 10 hours.

The Li$_2$S-LiI composite and MoS$_2$ were mixed at a weight ratio of 30:20:7.5. The obtained mixture was utilized as a cathode active material without any change.

## Manufacturing of cathode and secondary battery

### Example 6

### Preparation of cathode layer

The Li$_2$S-LiI-MoS$_2$ composite prepared in Example 1 was prepared as a cathode active material. Li$_6$PS$_5$Cl (D50=3.0 $\mu$m, crystalline), which was an argyrodite-type or kind crystal, was prepared as a solid electrolyte. PTFE was prepared as a binder. Such materials were physically mixed in a mortar at a weight ratio of 57.5:42.5:1.2 of composite cathode active material:solid electrolyte:binder to prepare a cathode mixture. The cathode mixture was obtained through dry mixing utilizing a ball mill.

The cathode mixture was provided on one surface of a cathode current collector made of aluminum foil, of which one surface was coated with carbon, and was plate-pressed at a pressure of 200 MPa for 10 minutes to prepare a cathode layer. The thickness of the cathode layer was about 120 $\mu$m. The thickness of a cathode active material layer was about 100 $\mu$m, and the thickness of the carbon-coated aluminum foil was about 20 $\mu$m. The area of the cathode active material layer was equal to the area of the cathode current collector.

### Preparation of anode layer

SUS (stainless steel) foil having a thickness of 10 $\mu$m was prepared as an anode current collector. As an anode active material, CB particles with a primary particle diameter of about 30 nm and silver (Ag) particles with an average particle diameter of about 60 nm were prepared.

4 g of a mixed powder obtained by mixing the CB particles and the silver (Ag) particles at a weight ratio of 3:1 was put into a container, and 4 g of an NMP solution including 7 wt% of a PVDF binder (#9300 manufactured by Kureha Corporation) was added thereto to prepare a mixed solution. While NMP was added little by little to the prepared mixed solution, the mixed solution was stirred to prepare a slurry. The prepared slurry was applied onto a SUS sheet by utilizing a bar coater, dried in air at a temperature 80 °C for 10 minutes, and then vacuum-dried at a temperature of 40 °C for 10 hours to prepare a stack. The prepared stack was cold roll-pressed to planarize a surface thereof, thereby preparing an anode layer having a first anode active material layer/anode current collector structure. The thickness of the first anode active material layer was about 15 $\mu$m. The area of the first anode active material layer was equal to the anode current collector.

### Preparation of solid electrolyte layer

A mixture was prepared by adding 1.5 parts by weight of an acrylic-based binder with respect to 98.5 parts by weight of a solid electrolyte to a LisPSsCI solid electrolyte (D50=3.0 $\mu$m, crystalline) which was an argyrodite-type or kind crystal. Octyl acetate was added to the prepared mixture and stirred to prepare a slurry. The prepared slurry was applied onto a 15 $\mu$m-thick non-woven fabric placed on a 75 $\mu$m-thick PET substrate by utilizing a bar coater and dried in air at a temperature 80 °C for 10 minutes to prepare a stack. The prepared stack was vacuum-dried at a temperature 80 °C for 2 hours to prepare a solid electrolyte layer.

### Inactive member

A slurry obtained by mixing a pulp fiber (cellulose fiber), a glass fiber, aluminum hydroxide (Al(OH)$_3$), an acrylic-based binder, and a solvent was molded into a gasket shape, and then the solvent was removed to prepare a flame-retardant inactive member.

A weight ratio of the pulp fiber (cellulose fiber), the glass fiber, the aluminum hydroxide (Al(OH)$_3$), and the acrylic-based binder was 20:8:70:2. The thickness of the inactive member was 120 $\mu$m.

Before the prepared flame-retardant inactive member was provided on the solid electrolyte layer, vacuum heat treatment was performed at a temperature 80 °C for 5 hours to remove moisture and/or the like from the flame-retardant inactive member.

### Manufacturing of solid secondary battery

Referring to FIG. 6, the solid electrolyte layer was provided on the anode layer such that the first anode active material layer was in contact with the solid electrolyte layer, and the cathode layer was provided on the solid electrolyte layer. A gasket was provided around the cathode layer to surround the cathode layer and be in contact with the solid electrolyte layer, thereby preparing a stack. The thickness of the gasket was about 120 $\mu$m. The described flame-retardant inactive member was utilized as the gasket. The gasket was provided in contact with a side surface of the cathode layer and the solid electrolyte layer. The cathode layer was provided at a central portion of the solid electrolyte layer, and the gasket was provided to surround the cathode layer and extend to an end portion of the solid electrolyte layer. The area of the cathode layer was about 90 % of the area of the solid electrolyte layer, and the gasket was provided in the remaining 10 % of the entire area of the solid electrolyte layer in which the cathode layer was not provided.

The prepared stack was plate-pressed at a temperature of 85 °C and a pressure of 500 MPa for 30 minutes. Through the plate pressing, the solid electrolyte layer is sintered to improve battery characteristics. The thickness of the sintered solid electrolyte layer was about 45 $\mu$m. The density of the LisPSsCl solid electrolyte, which was an argyrodite-type or kind crystal included in the sintered solid electrolyte layer, was 1.6 g/cc. The area of the solid electrolyte layer was equal to the area of the anode layer.

The pressed stack was put into a pouch and vacuum-sealed to manufacture a solid secondary battery. Portions of the cathode current collector and the anode current collector were extended to the outside of the sealed battery and utilized as a cathode terminal and an anode terminal.

## Examples 7 to 10

Cathode layers and solid secondary batteries were manufactured in substantially the same manner as in Example 6, except that the composite cathode active materials prepared in Examples 2 to 5 were utilized, respectively.

## Example 7-1

A cathode layer and a solid secondary battery were manufactured in substantially the same manner as in Example 6, except that the composite cathode active material prepared in Example 2-1 was utilized.

## Comparative Examples 6 to 10

Cathode layers and solid secondary batteries were manufactured in substantially the same manner as in Example 6, except that the composite cathode active materials prepared in Comparative Examples 1 to 5 were utilized, respectively.

## Example 11

Sulfide-based cathode active material ($Li_2$S-C composite), first anode active material layer (Ag-supported carbon), utilize of first and second flame-retardant inactive members

## Preparation of anode layer

SUS foil having a thickness of 10 $\mu$m was prepared as an anode current collector. For example, as an anode active material, CB particles with a primary particle diameter of about 30 nm and silver (Ag) particles with an average particle diameter of about 60 nm were prepared.

4 g of a mixed powder obtained by mixing the CB particles and the silver (Ag) particles at a weight ratio of 3:1 was put into a container, and 4 g of an NMP solution including 7 wt% of a PVDF binder (#9300 manufactured by Kureha Corporation) was added thereto to prepare a mixed solution. Next, while NMP was added little by little to the prepared mixed solution, the mixed solution was stirred to prepare a slurry. The prepared slurry was applied onto a SUS sheet by utilizing a bar coater and dried in air at a temperature of 80 °C for 10 minutes. For example, an obtained stack was vacuum-dried at a temperature of 40 °C for 10 hours. The dried stack was cold-roll-pressed at a pressure of 5 ton·f/cm² at a speed of 5 m/sec to planarize a surface of a first anode active material layer of the stack. An anode layer was prepared through such a process. The thickness of the first anode active material layer included in the anode layer was about 15 $\mu$m. The area of the first anode active material layer was equal to the area of an anode current collector.

## Preparation of cathode

The composite cathode active material prepared in Example 1 was prepared as a cathode active material.

$Li_6PS_5Cl$ (D50=3.0 $\mu$m, crystalline), which was an argyrodite-type or kind crystal, was prepared as a solid electrolyte. KB was prepared as a conductive agent. Such materials were mixed at a weight ratio of 40:50:10 of cathode active material:solid electrolyte:conductive agent to prepare a cathode mixture. The cathode mixture was obtained through dry mixing utilizing a ball mill. The cathode mixture obtained through the ball milling formed an ion-conductive and electronic-conductive network.

The cathode mixture was provided on one surface of a cathode current collector made of SUS or aluminum foil, of which one surface was coated with carbon, and was plate-pressed at a pressure of 200 MPa for 10 minutes to prepare a cathode layer. The thickness of the cathode layer was about 120 $\mu$m. The thickness of a cathode active material layer was about 100 $\mu$m, and the thickness of the carbon-coated aluminum foil was about 20 $\mu$m.

**Preparation of solid electrolyte layer**

A mixture was prepared by adding 1.5 parts by weight of an acrylic-based binder with respect to 98.5 parts by weight of a solid electrolyte to a LisPSsCl solid electrolyte ($D_{50}$=3.0 um, crystalline) which was an argyrodite-type or kind crystal. Octyl acetate was added to the prepared mixture and stirred to prepare a slurry. The prepared slurry was applied onto a 15 $\mu$m-thick non-woven fabric placed on a 75 $\mu$m-thick PET substrate by utilizing a bar coater and dried in air at a temperature 80 °C for 10 minutes to obtain a stack. The obtained stack was vacuum-dried at a temperature of 80 °C for 2 hours. A solid electrolyte layer was prepared through such a process.

**Flame-retardant inactive member**

A slurry obtained by mixing a pulp fiber (cellulose fiber), a glass fiber, aluminum hydroxide (Al(OH)$_3$), titanium dioxide (TiO$_2$), an acrylic-based binder, and a solvent was molded into a gasket shape, and then the solvent was removed to prepare a flame-retardant inactive member.

A weight ratio of the pulp fiber (cellulose fiber), the glass fiber, the aluminum hydroxide (Al(OH)$_3$), titanium dioxide (TiO$_2$), and the acrylic-based binder was 20:8:60:10:2. The thickness of the inactive member was 120 $\mu$m.

Before the prepared flame-retardant inactive member was provided on the solid electrolyte layer, vacuum heat treatment was performed at 80 °C for 5 hours to remove moisture and/or the like from the flame-retardant inactive member.

**Manufacturing of solid secondary battery**

Referring to FIG. 6, the solid electrolyte layer was provided on the anode layer such that the first anode active material layer was in contact with the solid electrolyte layer, and the cathode layer was provided on the solid electrolyte layer. A first gasket was provided around the anode layer to surround the anode layer and be in contact with the solid electrolyte layer, thereby prepare a stack. The thickness of the first gasket was about 120 $\mu$m. The described flame-retardant inactive member (first inactive member) was utilized as the first gasket. The anode layer was provided at a central portion of the solid electrolyte layer, and the first gasket was provided to surround the anode layer and extend to an end portion of the solid electrolyte layer. The area of the anode layer was about 90 % of the area of the solid electrolyte layer, and the first gasket was provided in the remaining 10 % of the entire area of the solid electrolyte layer in which the anode layer was not provided.

A second gasket was provided around the cathode layer to surround the cathode layer and be in contact with the solid electrolyte layer, thereby preparing a stack. The thickness of the second gasket was about 120 $\mu$m. The described flame-retardant inactive member (second inactive member) was utilized as the second gasket. The cathode layer was provided at a central portion of the solid electrolyte layer, and the second gasket was provided to surround the cathode layer and extend to the end portion of the solid electrolyte layer. The area of the cathode layer was about 80 % of the area of the solid electrolyte layer, and the second gasket was provided in the remaining 20 % of the entire area of the solid electrolyte layer in which the cathode layer was not provided.

The prepared stack was plate-pressed at a temperature of 85 °C and a pressure of 500 MPa for 30 minutes. Through the plate pressing, the solid electrolyte layer is sintered to improve battery characteristics. The thickness of the sintered solid electrolyte layer was about 45 $\mu$m.

The pressed stack was put into a pouch and vacuum-sealed to manufacture a solid secondary battery. Portions of the cathode current collector and the anode current collector were extended to the outside of the sealed battery and utilized as a cathode layer terminal and an anode layer terminal.

**Example 12**

Mono-cell solid secondary battery, sulfide-based cathode active material (Li$_2$S-C-solid electrolyte composite), utilize of lithium host layer, utilize of first and second flame-retardant inactive members

### Preparation of anode layer

SUS foil having a thickness of 10 $\mu$m was prepared as an anode current collector. For example, a carbonized cotton sheet was prepared as a lithium host. The carbonized cotton sheet was prepared according to a method disclosed in Joule 2017, 1, 563, the entire content of which is incorporated herein by reference.

The prepared carbonized cotton sheet was provided on SUS foil to prepare a stack. The prepared stack was vacuum-dried at a temperature of 40 °C for 10 hours. The dried stack was cold-roll-pressed at a pressure of 5 ton·f/cm$^2$ at a speed of 5 m/sec to planarize a surface of a first anode active material layer of the stack. An anode layer was prepared through such a process. The thickness of the carbonized cotton sheet included in the anode layer, for example, the thickness of a lithium host layer, was about 120 $\mu$m.

### Preparation of cathode layer

The composite cathode active material of Example 1 was prepared as a cathode active material.

$Li_6PS_5Cl$ (D50=3.0 $\mu$m, crystalline), which was an argyrodite-type or kind crystal, was prepared as a solid electrolyte. KB was prepared as a conductive agent. Such materials were mixed at a weight ratio of 40:50:10 of cathode active material:solid electrolyte:conductive agent to prepare a cathode mixture. The cathode mixture was obtained through dry mixing utilizing a ball mill. The cathode mixture obtained through the ball milling formed an ion-conductive and electronic-conductive network.

The cathode mixture was provided on one surface of a cathode current collector made of SUS or aluminum foil, of which one surface was coated with carbon, and was plate-pressed at a pressure of 200 MPa for 10 minutes to prepare a cathode layer. The thickness of the anode layer was about 120 $\mu$m. The thickness of a cathode active material layer was about 100 $\mu$m, and the thickness of the carbon-coated aluminum foil was about 20 $\mu$m.

### Preparation of solid electrolyte layer

A mixture was prepared by adding 1.5 parts by weight of an acrylic-based binder with respect to 98.5 parts by weight of a solid electrolyte to a LisPSsCl solid electrolyte (D50=3.0 um, crystalline) which was an argyrodite-type or kind crystal. Octyl acetate was added to the prepared mixture and stirred to prepare a slurry. The prepared slurry was applied onto a 15 $\mu$m-thick non-woven fabric placed on a 75 $\mu$m-thick PET substrate by utilizing a bar coater and dried in air at a temperature 80 °C for 10 minutes to obtain a stack. The obtained stack was vacuum-dried at a temperature of 80 °C for 2 hours. A solid electrolyte layer was prepared through such a process.

### Flame-retardant inactive member

A slurry obtained by mixing a pulp fiber (cellulose fiber), a glass fiber, aluminum hydroxide ($Al(OH)_3$), titanium dioxide ($TiO_2$), an acrylic-based binder, and a solvent was molded into a gasket shape, and then the solvent was removed to prepare a flame-retardant inactive member.

A weight ratio of the pulp fiber (cellulose fiber), the glass fiber, the aluminum hydroxide ($Al(OH)_3$), titanium dioxide ($TiO_2$), and the acrylic-based binder was 20:8:60:10:2. The thickness of the inactive member was 120 $\mu$m.

Before the prepared flame-retardant inactive member was provided on the solid electrolyte layer, vacuum heat treatment was performed at a temperature 80 °C for 5 hours to remove moisture and/or the like from the flame-retardant inactive member.

### Manufacturing of solid secondary battery

Referring to FIG. 8, the solid electrolyte layer was provided on the anode layer such that the lithium host layer was in contact with the solid electrolyte layer, and the cathode layer was provided on the solid electrolyte layer. A first gasket was provided around the anode layer to surround the anode layer and be in contact with the solid electrolyte layer, thereby preparing a stack. The thickness of the first gasket was about 120 $\mu$m. The described flame-retardant inactive member (first flame-retardant inactive member) was utilized as the first gasket. The anode layer was provided at a central portion of the solid electrolyte layer, and the first gasket was provided to surround the anode layer and extend to an end portion of the solid electrolyte layer. The area of the anode layer was about 90 % of the area of the solid electrolyte layer, and the first gasket was provided in the remaining 10 % of the entire area of the solid electrolyte layer in which the anode layer was not provided.

A second gasket was provided around the cathode layer to surround the cathode layer and be in contact with the solid electrolyte layer, thereby prepare a stack. The thickness of the second gasket was about 120 $\mu$m. The described flame-retardant inactive member (second flame-retardant inactive member) was utilized as the second gasket. The cathode layer was provided at a central portion of the solid electrolyte layer, and the second gasket was provided to surround the cathode layer and extend to the end portion of the solid electrolyte layer. The area of the cathode layer was about 90 % of the area of the solid electrolyte layer, and the second gasket was provided in the remaining 10 % of the entire area of the solid electrolyte layer in which the cathode layer was not provided.

The prepared stack was plate-pressed at a temperature of 85 °C and a pressure of 500 MPa for 30 minutes. Through the plate pressing, the solid electrolyte layer is sintered to improve battery characteristics. The thickness of the sintered solid electrolyte layer was about 45 $\mu$m. The density of the LisPSsCI solid electrolyte, which was an argyrodite-type or kind crystal included in the sintered solid electrolyte layer, was 1.6 g/cc.

The pressed stack was put into a pouch and vacuum-sealed to manufacture a solid secondary battery. Portions of the cathode current collector and the anode current collector were extended to the outside of the sealed battery and utilized as a cathode layer terminal and an anode layer terminal.

**Comparative Example 11: Sulfide-based cathode active material ($Li_2S$-C-solid electrolyte composite), nonuse of lithium host layer (free), nonuse of first and second flame-retardant inactive members (free)**

A solid secondary battery was manufactured in substantially the same manner as Example 11, except that a second flame-retardant inactive member (second gasket) was not utilized in a cathode layer, only an anode current collector was utilized in an anode layer, and a lithium host layer and a first flame-retardant inactive member (first gasket) was not utilized.

**Comparative Example 12: Sulfide-based cathode active material ($Li_2S$-C-solid electrolyte composite), nonuse of lithium host layer (free), nonuse of first flame-retardant inactive member (free)**

A solid secondary battery was manufactured in substantially the same manner as Example 11, except that a second flame-retardant inactive member (second gasket) was utilized in a cathode layer, only an anode current collector was utilized in an anode layer, and a lithium host layer and a first flame-retardant inactive member (first gasket) was not utilized.

**Evaluation Example 1: XRD analysis and SEM analysis**

An X-ray diffraction (XRD) spectrum was measured on the composite cathode active materials (for example, composites) prepared in Example 1 and Comparative Example 4 by utilizing Cu K$\alpha$ radiation. $Li_2S$ crystallite sizes calculated from a first peak for a (111) crystal plane appearing at a diffraction angle 2$\theta$ of 27°$\pm$2.0° in the measured XRD spectrum are shown in Table 1. The crystallite size was calculated by utilizing the Scherrer equation.

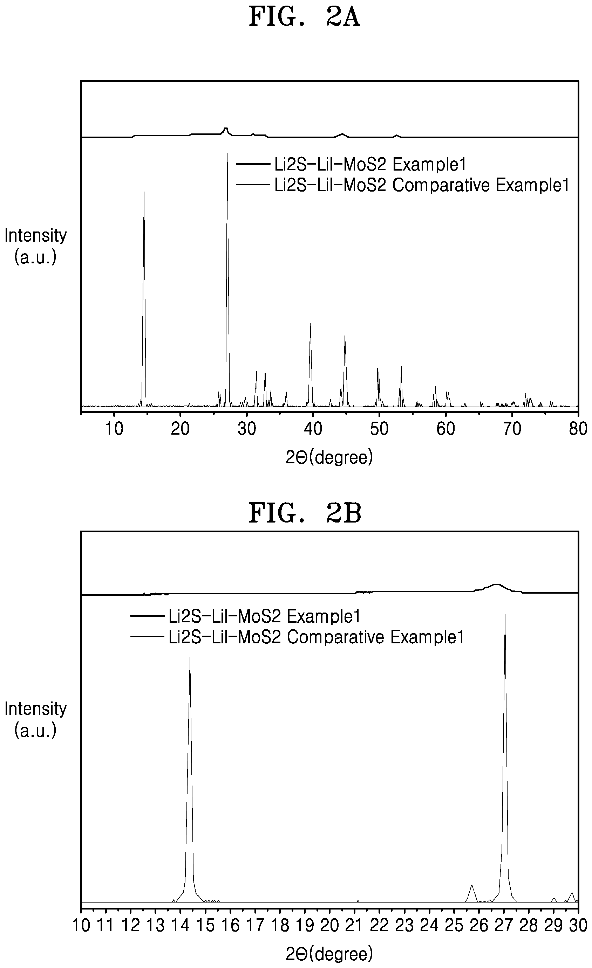

Particle diameters (D50 particle diameters) of Li2S in the composite cathode active materials prepared in Example 1 and Comparative Examples 2 to 5 were measured through a PSA utilizing a laser and a SEM. The $Li_2S$ particle size of the composite cathode active material is the arithmetic average of the particle sizes of a plurality of $Li_2S$ particles measured utilizing software in a scanning electron microscope image. Measurement results are shown in Table 1 and FIGS. 2A to 2C.

Table 1

| Classification | First stage milling | Second stage milling | Solid solution formation | $Li_2S$ crystallite size [nm] | Li2S particle size [$\mu$m] |
|---|---|---|---|---|---|
| Example 1 30 % $Li_2S$-20 % LiI-7.5 % $MoS_2$+42.5 % SE | 600 rpm, 28 G, 10 hours | 600 rpm, 28 G, 5 hours | ○ | 9.6 | Less than 1 |
| Example 2 30 % $Li_2S$-20 % LiI-7.5 % spherical $VO_2$+42.5 % SE | 600 rpm, 28 G, 10 hours | 600 rpm, 28 G, 5 hours | ○ | 9.8 | Less than 1 |
| Example 3 30 % $Li_2S$-20 % LiI-7.5 % $TiS_2$+42.5 % SE | 600 rpm, 28 G, 10 hours | 600 rpm, 28 G, 5 hours | ○ | 9.8 | Less than 1 |
| Example 4 30 % $Li_2S$-20 % LiI-7.5 % $WS_2$+42.5 % SE | 600 rpm, 28 G, 10 hours | 600 rpm, 28 G, 5 hours | ○ | 10.0 | Less than 1 |
| Example 5 30 % $Li_2S$-20 % LiI-7.5 % $ZrS_2$+42.5 % SE | 600 rpm, 28 G, 10 hours | 600 rpm, 28 G, 5 hours | ○ | 9.8 | Less than 1 |

(continued)

| Classification | First stage milling | Second stage milling | Solid solution formation | $Li_2S$ crystallite size [nm] | Li2S particle size [$\mu$m] |
|---|---|---|---|---|---|
| Comparative Example 1 $Li_2S$-LiI-CNF | 600 rpm, 28 G, 10 hours | 600 rpm, 28 G, 10 hours | ○ | 9.8 | Less than 1 |
| Comparative Example 2 30 % $Li_2S$-20 % LiI-7.5 % $SiO_2$+42.5 % SE | 600 rpm, 28 G, 10 hours | 600 rpm, 28 G, 5 hours | ○ | 10.1 | Less than 1 |
| Comparative Example 3 30 % $Li_2S$+20 % LiI+7.5 % $MoS_2$ simple blend | - | - | X | 67 | 8 |
| Comparative Example 4 30 % $Li_2S$-7.5 % $MoS_2$-20 % LiI+42.5 % SE | 600 rpm,28 G, 5 hours | 600 rpm, 28 G, 10 hours | X | 10.2 | Less than 1 |
| Comparative Example 5 30 % $Li_2S$-20 % LiI+7.5 % $MoS_2$ simple blend | 600 rpm, 28 G, 10 hours | - | ○ | 20 | 2 |

As shown in Table 1, the $Li_2S$-LiI-$MoS_2$ composite of Example 1 included a $Li_2S$-LiI solid solution, the size of a $Li_2S$ crystallite was 9.6 nm, and the particle size of $Li_2S$ in the composite was 1 $\mu$m or less. In such a composite, electrical conductivity and ionic conductivity are concurrently (e.g., simultaneously) improved through ball milling to reduce the relative content (e.g., amount) of a solid electrolyte and increase the relative content (e.g., amount) of $Li_2S$, thereby improving an electrode energy density.

In Table 1, "O" indicates a solid solution was formed and "X" indicates a solid solution was not formed. For example, as shown in Table 1, a simple mixture of $Li_2S$, LiI, and $MoS_2$ in Comparative Example 3 did not form a solid solution.

For example, the composite of Comparative Example 4 was prepared through milling, and thus a $Li_2S$-LiI solid solution and a $Li_2S$-LiI-$MoS_2$ composite including the same were not properly formed.

According to Example 1, before ball milling was performed on lithium sulfide and $MoS_2$ which was an inorganic electronic-conductive structure, a morphological state was investigated. According to Example 1, scanning electron microscopy and transmission electron microscopy (TEM) analyses were performed to show a state after ball milling was performed on both (e.g., simultaneously) of lithium sulfide and $MoS_2$ which was an inorganic electronic-conductive structure.

As a result of the scanning electron microscopy analysis, a plurality of fine particles had an aggregated form after ball milling, and a lattice of molybdenum sulfide was observed through a TEM image to see that a composite of lithium sulfide and $MoS_2$ was well formed.

**Evaluation Example 2: XRD analysis**

An XRD spectrum was measured on the composite of Example 1, the simple mixture of $Li_2S$, LiI, and $MoS_2$ of Comparative Example 3, and the composite of Comparative Example 4 by utilizing Cu K$\alpha$ radiation. Evaluation results thereof are shown in FIGS. 2A and 2B. FIG. 2B is an enlarged diagram of a partial region of FIG. 2A.

In Example 1, a peak at $2\Theta=27°\pm2.0°$ was slightly shifted to the left (a $Li_2S$-LiI solid solution was formed), and a peak at $2\Theta=27°\pm2.0°$ was a peak corresponding to a $MoS_2$ crystal plane (111). The intensity of a $MoS_2$ peak at $2\Theta=14.5°\pm0.5°$, for example, at 14.1°, was considerably reduced.

For example, in Comparative Example 3, a solid solution was not formed, and thus a peak at $2\Theta=27°$ remained without shifting, and a $MoS_2$ peak at $2\Theta=14.1°$ was observed without a decrease in intensity. In Comparative Example 4, it was confirmed that a peak at $2\Theta=27°\pm2.0°$ was not shifted (a solid solution was not formed) or the intensity of a $MoS_2$ peak at $2\Theta=14.5°\pm0.5°$, for example, 14.1°, was not reduced.

As a result of evaluation, in the composite of Example 1, it could be seen that a solid solution was formed, and unlike the simple mixture of Comparative Example 3, it could be confirmed that chemical bonds existed between respective components constituting the composite.

**Evaluation Example 3: Charge/discharge test**

The charge/discharge characteristics of the solid secondary batteries of Examples 6 to 10 and Comparative Examples 6 to 10 adopting the composite cathode active materials prepared in Examples 1 to 5 and Comparative Examples 1 to 5 were evaluated through the following charge/discharge test.

The charge/discharge test was performed by put the solid secondary batteries into a thermostatic bath at a temperature of 45 °C.

At a first cycle, the solid secondary batteries were charged at a constant current of 0.1 C for 12.5 hours until a battery voltage reached 2.5 V to 2.8 V. Subsequently, the solid secondary batteries were discharged at a constant current of 0.1 C for 12.5 hours until the battery voltage reached 0.3 V.

A discharge capacity of the first cycle was taken as a standard capacity. The standard capacity is shown as a specific capacity of $Li_2S$ in Table 1.

From a second cycle, charging and discharging were performed up to 150 cycles under the same conditions as the first cycle. Measurement results are shown in Table 2. Initial efficiency is represented by Equation 1.

Equation 1

initial efficiency [%] = [first cycle discharge capacity/first cycle charge capacity]×100

The number of cycles refers to the number of cycles required for discharge capacity to decrease to 80 % of the standard capacity after the second cycle. It was regarded that, as the number of cycles was increased, lifespan characteristics were improved.

Table 2

| Classification | Specific capacit V [mAh/g] | Electrode density (g/cm₃) | Electrode capacity (mAh/g) | Initial efficiency [%] | Lifespan (SOH80@) |
|---|---|---|---|---|---|
| Example 6: $Li_2S$-LiI-$MoS_2$ | 1,160 | 1.73 | 348 | 88 | 550 |
| Example 7: $Li_2S$-LiI-$VO_2$ | 880 | 1.68 | 264 | 83 | 450 |
| Example 8: $Li_2S$-LiI-$TiS_2$ | 1,140 | 1.61 | 342 | 86 | 500 |
| Example 9: $Li_2S$-LiI-$WS_2$ | 900 | 1.90 | 270 | 84 | 490 |
| Example 10: $Li_2S$-LiI-$ZrS_2$ | 930 | 1.71 | 279 | 85 | 500 |
| Comparative Example 6: $Li_2S$-LiI-CNF | 700 | 1.5 | 210 | 65 | 10 |
| Comparative Example: 7 $Li_2S$-LiI-$SiO_2$ | 90 | 1.55 | 27 | - | - |
| Comparative Example 8: $Li_2S$+LiI+$MoS_2$ | 50 | 1.73 | 15 | - | - |
| Comparative Example 9: $Li_2S$-$MoS_2$-LiI | 420 | 1.73 | 126 | 52 | 10 |
| Comparative Example 10: $Li_2S$-LiI+$MoS_2$ | 80 | 1.73 | 24 | - | - |

In Table 2, "-" indicates that the results were unmeasurable.

As shown in Table 2, the solid secondary batteries of Examples 6 to 10 adopting the composite cathode active materials of Examples 1 to 5 showed improved discharge capacity, initial efficiency, and lifespan characteristics as compared with the solid secondary batteries of Comparative Examples 6 to 10 adopting the composite cathode active materials of Comparative Examples 1 to 5.

The solid secondary battery of Comparative Example 8, which adopted the composite cathode active material of Comparative Example 3 including a separate LiI phase and having an increased crystallite size, also had an electrode capacity lower than that of Example 6 adopting the composite cathode active material of Example 1.

In the solid secondary batteries of Comparative Examples 7 to 10 adopting the composite cathode active materials of Comparative Examples 2 to 5, at least one of the initial efficiency and the lifespan characteristics was degraded.

**Evaluation Example 4: Evaluation of high-rate characteristics**

The high-rate characteristics of the solid secondary batteries of Examples 6 to 10 and Comparative Examples 6 to 10 adopting the composite cathode active materials prepared in Examples 1 to 5 and Comparative Examples 1 to 5 were evaluated through the following charge/discharge test. The charge/discharge test was performed by put the solid secondary batteries into a thermostatic bath at a temperature of 45 °C.

The solid secondary batteries manufactured in Examples 6 to 10 and Comparative Examples 6 to 9 were charged at a constant current of 0.1 C, a constant voltage of 4.2 V, and a temperature of 45 °C until a battery voltage reached 4.2 V. Next, the solid secondary batteries were discharged at a constant current of 0.1 C until the battery voltage reached 2.5 V.

Subsequently, the solid secondary batteries were charged at a constant current of 0.1 C and a constant voltage of 4.2 V until the battery voltage reached 4.2 V and then discharged at a constant current of 0.33 C until the battery voltage reached 2.5V.

After the charging/discharging, the high-rate characteristics were evaluated according to Equation 3 and shown in Table 3.

high-rate characteristics (%) = (discharge capacity at 0.33 C/discharge capacity at 0.1 C)X100

Table 3

| Classification | High-rate characteristics (0.33CC/0.1C) [%] |
|---|---|
| 6 ($Li_2S$-LiI-$MoS_2$) | 97 |
| 7 ($_{Li2S}$-LiI-$VO_2$) | 92 |
| 8 ($Li_2S$-LiI-$TiS_2$) | 96 |
| 9 ($Li_2S$-LiI-$WS_2$) | 92 |
| 10 ($Li_2S$-LiI-$ZrS_2$) | 95 |
| Comparative 6 ($Li_2S$-LiI-CNF) | 89 |
| Comparative 7 ($Li_2S$-LiI-$SiO_2$) | 0 |
| Comparative 8 ($Li_2S$-LiI+$MoS_2$) | 0 |
| Comparative 9 ($Li_2S$+LiI+$MoS_2$) | 0 |
| Comparative 10 ($Li_2S$-$MoS_2$-LiI) | 0 |

As shown in Table 3, the solid secondary batteries of Examples 6 to 10 had improved high-rate characteristics as compared with the solid secondary batteries of Comparative Examples 6 to 10. As shown in Table 3, the high-rate characteristics of the solid secondary batteries of Comparative Examples 7 to 10 could not be measured.

**Evaluation Example 5: High-temperature lifespan characteristic test**

The charge/discharge characteristics of the solid secondary batteries manufactured in Example 11 and Comparative Example 11 were evaluated through the following charge/discharge test. The charge/discharge test was performed by put the solid secondary battery into a thermostatic bath at a temperature of 45 °C.

At a first cycle, the solid secondary batteries were charged at a constant current of 0.3 mA/cm$^2$ for 12.5 hours until a battery voltage reached 2.5 V to 2.8 V. Subsequently, the solid secondary batteries were discharged at a constant current of 0.3 mA/cm$^2$ for 12.5 hours until the battery voltage reached 0.5 V.

A discharge capacity of the first cycle was taken as a standard capacity. From a second cycle, charging and discharging were performed up to 200 cycles under the same conditions as the first cycle. Measurement results are shown in Table 4.

It was regarded that, as the number of cycles, required for a discharge capacity to decrease to 95 % of the standard capacity after the second cycle, was increased, lifespan characteristics were improved.

In the solid secondary battery of Comparative Example 11, a short circuit occurred before the first cycle was completed, and thus it was impossible to measure lifespan characteristics.

Table 4

| Classification | Number of cycles [times] |
|---|---|
| Example 11 (mono-cell/composite cathode active material/flame-retardant anode gasket/carbonized cotton sheet/flame-retardant anode gasket) | 172 |
| Comparative Example 11 (mono-cell/$Li_{2S}$-C-solid electrolyte composite///-/-) | Unmeasura ble |

As shown in Table 4, the solid secondary battery of Example 11 had improved lifespan characteristics as compared with the solid secondary battery of Comparative Example 11.

As compared with the solid secondary battery of Comparative Example 9 not including a lithium host, the growth of lithium dendrites was suppressed or reduced, a short circuit was suppressed or reduced, and a change in volume of an anode layer was suppressed or reduced so that the solid secondary battery of Example 11 including a lithium host was determined to have improved lifespan characteristics.

In some embodiments, it was confirmed that a lithium metal layer was formed in a second anode active material layer between a first anode active material layer and an anode current collector after initial charging in the solid secondary batteries of Examples 5 to 8. This was confirmed through a cross-sectional SEM image of the solid secondary battery.

According to an aspect of the present disclosure, there may be provided a solid secondary battery in which an anode with an improved electronic-conductive network is provided by utilizing a composite that uses an inorganic electronic-conductive structure, thereby improving initial efficiency and high-rate characteristics and also improving a volumetric energy density.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

## Claims

1. A solid secondary battery (1) comprising:

   a cathode layer (10);
   an anode layer (20); and
   a solid electrolyte layer (30) between the cathode layer (10) and the anode layer (20),
   wherein
   the cathode layer (10) comprises a cathode current collector (11) and a cathode active material layer (12) on at least one surface of the cathode current collector (11),
   the cathode active material layer (12) comprises a composite cathode active material, and
   the composite cathode active material comprises a composite of $M_2S$, an alkali metal salt, and an inorganic electronic-conductive structure (3), and
   wherein
   M is an alkali metal,
   the alkali metal is Li or Na, and
   the inorganic electronic-conductive structure (3) has an electronic conductivity of $1 \times 10^{-3}$ siemens per centimeter (S/cm) or more.

2. The solid secondary battery (1) as claimed in claim 1, wherein

   a size of an $M_2S$ crystallite obtained from an X-ray diffraction (XRD) spectrum of the composite is less than 10 nanometer (nm), and

the composite comprises a solid solution of the $M_2S$ and the alkali metal salt.

3. The solid secondary battery (1) as claimed in claim 1 or claim 2, wherein an amount of the inorganic electronic-conductive structure (3) is in a range of about 1 part by weight to about 30 parts by weight with respect to about 100 parts by weight of the composite, and/or

the inorganic electronic-conductive structure (3) has a form of a zero-dimensional structure, a one-dimensional structure, or a two-dimensional structure and has a length of about 1 micrometer ($\mu$m) to about 50 $\mu$m and a thickness of about 0.01 $\mu$m to about 10 $\mu$m, and
the $M_2S$ has a size of about 0.1 nm to about 10 $\mu$m.

4. The solid secondary battery (1) as claimed in any of claims 1 to 3, wherein the inorganic electronic-conductive structure (3) comprises:

a transition metal sulfide;
a sulfide of at least one metal of metals of Groups 3 to 5 of the periodic table, or a combination thereof;
at least one metal selected from among titanium, vanadium, chromium, manganese, iron, cobalt, nickel, copper, zinc, niobium, tantalum, molybdenum, and tungsten; or
a combination thereof, and

wherein the inorganic electronic-conductive structure (3) further comprises:

at least one metal oxide selected from among $VO_2$, $ReO_2$, $CrO_2$, $SnO_2$, $TiO_2$, $ZrO_2$, $Al_2O_3$, TeN, TiN, TiO, TiOx (wherein 0.75<x<1.45), $Ti_nO_{2n-1}$ (wherein 4<n<10), ReOs, CrOs, and VOs; and
at least one metal material selected from among $ZrS_2$, FeS, $FeS_2$, CuS, $Cu_2S$, $CuS_2$, $Cu_9S_8$, $Cu_7S_4$, CoS, $CoS_2$, $Co_3S_4$, $Co_9S_8$, NiS, $NiS_2$, $Ni_9S_8$, $Ni_3S_2$, VS, $VS_2$, $V_2S_3$, $V_2S_5$, $VS_4$, $NbS_2$, NbSs, $NbS_4$, NbSs, $Nb_2S_3$, $Nb_2S_5$, $TaS_2$, TaSs, $TaS_4$, TaSs, $Ta_2S_3$, $Ta_2S_5$, $Cr_2S_3$, $CrS_3$, $MoS_2$, $MoS_3$, $MoS_4$, $WS_2$, $WS_3$, $WS_4$, $WS_5$, MnS, $Mn_2S_3$, $TiS_2$, $NiNb_3S_6$, $Cu_2MoS_4$, and $Cu_4Mo_6S_8$, or a combination thereof.

5. The solid secondary battery (1) as claimed in any of claims 1 to 4, wherein,

in an X-ray diffraction (XRD) spectrum of the composite cathode active material, a first diffraction angle of each of a first peak appearing at a diffraction angle ($2\theta$) of about $14.5°\pm0.5°$, a second peak appearing at a diffraction angle ($2\theta$) of about $32.5°\pm0.5°$, and a third peak appearing at a diffraction angle ($2\theta$) of about $58.5°\pm0.5°$ in the composite is less than a second diffraction angle of each of a fourth peak appearing at a diffraction angle ($2\theta$) of about $14.5°\pm0.5°$, a fifth peak appearing at a diffraction angle ($2\theta$) of about $32.5°\pm0.5°$, and a sixth peak appearing at a diffraction angle ($2\theta$) of about $58.5°\pm0.5°$ in an XRD spectrum of $MoS_2$ used to prepare the composite, respectively, and
an intensity of the first peak appearing at a diffraction angle ($2\theta$) of about $14.5°\pm0.5°$ is less than an intensity of the fourth peak appearing at a diffraction angle ($2\theta$) of about $14.5°\pm0.5°$ in the XRD spectrum of the $MoS_2$ used to prepare the composite, and/or
wherein,
in an X-ray diffraction (XRD) spectrum of the composite,
a first lattice constant (d1) derived from a seventh peak appearing at a diffraction angle ($2\theta$) of $27°\pm2.0°$ corresponding to a (111) crystal plane of the $M_2S$ is larger than a second lattice constant (d2) derived from an eighth peak appearing at a diffraction angle ($2\theta$) of about $27°\pm2.0°$ corresponding to a (111) crystal plane of the $M_2S$ in an XRD spectrum of the $M_2S$ used to prepare the composite, and
wherein a size of the first lattice constant (d1) is 5.78 angstrom (Å) or more.

6. The solid secondary battery (1) as claimed in any of claims 1 to 5, wherein

a particle size of the $M_2S$ is less than or equal to a particle size of the alkali metal salt,
a particle size of the inorganic electronic-conductive structure (3) is greater than a particle size of each of a lithium sulfide and the alkali metal salt, and
the particle sizes of the inorganic electronic-conductive structure (3), the alkali metal salt, and the $M_2S$ gradually decrease in order of the inorganic electronic-conductive structure (3), the alkali metal salt, and the $M_2S$.

7. The solid secondary battery (1) as claimed in any of claims 1 to 6, wherein

the cathode active material layer (12) further comprises a solid electrolyte, and wherein

the solid electrolyte comprises a sulfide-based solid electrolyte, an oxide-based solid electrolyte, a polymer solid electrolyte, or a combination thereof, and

an amount of the solid electrolyte is in a range of about 10 parts by weight to about 60 parts by weight, with respect to 100 parts by weight of the cathode active material layer (12).

8. The solid secondary battery (1) as claimed in any of claims 1 to 9, wherein

the alkali metal salt is a lithium salt or a sodium salt and is a binary compound or a ternary compound, and wherein

the binary compound comprises: Lil, LiBr, LiCl, LiF, LiH, $Li_2O$, $Li_2Se$, $Li_2Te$, LisN, LisP, $Li_3As$, LisSb, $Li_3Al_2$, LiBs, or a combination thereof; or Nal, NaBr, NaCl, NaF, $Na_2O$, $Na_2Se$, NasN, NasP, $Na_3As$, NasSb, $Na_3Al_2$, NaBs, or a combination thereof,

the ternary compound comprises $Li_3OCl$, $LiPF_6$, $LiBF_4$, $LiSbF_6$, $LiAsF_6$, $LiClO_4$, $LiAlO_2$, $LiAlCl_4$, $LiNO_3$, $Li_2CO_3$, $LiBH_4$, $Li_2SO_4$, $Li_3BO_3$, $Li_3PO_4$, $Li_4NCl$, $Li_5NCl_2$, $Li_3BN_2$, or a combination thereof or comprises $Na_3OCl$, $NaBF_4$, $NaPF_6$, $NaAsF_6$, $NaClO_4$, NaNOs, $NaAlO_2$, NaAlCl4, NaNOs, $Na_2CO_3$, $NaBH_4$, $Na_2SO_4$, $Na_3BO_3$, $Na_3PO_4$, $Na_4NCl$, $Na_5NCl_2$, $Na_3BN_2$, or a combination thereof, and

a molar ratio of the $M_2S$ to the alkali metal salt in the composite is in a range of about 50:50 to about 95:5.

9. The solid secondary battery (1) as claimed in any of claims 1 to 8, wherein a particle size of the composite is 2 $\mu$m or less.

10. The solid secondary battery (1) as claimed in any of claims 1 to 9, wherein the composite has a two-dimensional form and comprises a carbon-based material.

11. The solid secondary battery (1) as claimed in any of claims 1 to 10, wherein the anode layer (20) comprises an anode current collector (21) and a first anode active material layer (22) on the anode current collector (21), wherein

an anode active material of the first anode active material layer (22) comprises preferably at least one selected from a carbon-based anode active material and a metal-based anode active material,

the carbon-based anode active material comprises amorphous carbon, crystalline carbon, porous carbon, or a combination thereof,

the metal-based anode active material comprises gold (Au), platinum (Pt), palladium (Pd), silicon (Si), silver (Ag), aluminum (Al), bismuth (Bi), tin (Sn), zinc (Zn), or a combination thereof, and

the anode active material of the first anode active material layer (22) comprises a mixture of a metal-based anode active material and a carbon-based material, a metal-based anode active material supported on a carbon-based material, or a combination thereof; and

optional further comprising a second anode active material layer (24) between the anode current collector (21) and the first anode active material layer (22), wherein

the second anode active material layer (24) is a metal layer comprising lithium or a lithium alloy and is a plated layer, and

the first anode active material layer (22) is thicker than the second anode active material layer (24).

12. The solid secondary battery (1) as claimed in any of claims 1 to 11, wherein

the anode layer (20) comprises an anode current collector (21) and a lithium host layer on one surface of the anode current collector (21),

the lithium host layer comprises a lithium host structure,

the lithium host structure comprises one or more lithium hosts, wherein the lithium host comprises a carbon-based lithium host, a metal-based lithium host, a polymer-based lithium host, or a combination thereof, and

the solid secondary battery (1) comprises a first inactive member (40/41/42) on one side surface of the anode layer (20), and/or the solid secondary battery (1) comprises an inactive elastic member on one surface of the cathode layer (10) or the anode layer (20), or

does not comprise the inactive elastic member.

13. The solid secondary battery (1) as claimed in any of claims 1 to 12,

wherein

the solid electrolyte layer (30) comprises a solid electrolyte, a gel electrolyte, or a combination thereof, wherein
the solid electrolyte comprises a sulfide-based solid electrolyte, an oxide-based solid electrolyte, a polymer solid electrolyte, or a combination thereof,
the gel electrolyte comprises a polymer gel electrolyte,
the sulfide-based solid electrolyte comprises at least one selected from among:

$Li_2S-P_2S_5$;

$Li_2S-P_2S_5-LiX$,

X being a halogen element;

$Li_2S-P_2S_5-Li_2O$;

$Li_2S-P_2S_5-Li_2O-LiI$;

$Li_2S-SiS_2$;

$Li_2S-SiS_2-LiI$;

$Li_2S-SiS_2-LiBr$;

$Li_2S-SiS_2-LiCl$;

$Li_2S-SiS_2-B_2S_3-LiI$;

$Li_2S-SiS_2-P_2S_5-LiI$;

$Li_2S-B_2S_3$;

$Li_2S-P_2S_5-Z_mS_n$, m

and n being each a positive number, and Z being one selected from among Ge, Zn, and Ga;

$Li_2S-GeS_2$;

$Li_2S-SiS_2-Li_3PO_4$;

$Li_2S-SiS_2-Li_pMO_q$,

p and q being each a positive number, and M being one selected from among P, Si, Ge, B, Al, Ga, and In;

$Li_{7-x}PS_{6-x}Cl_x$, 0<x<2; $Li_{7-x}PS_{6-x}Br_x$, 0<x<2;

and

$Li_{7-x}PS_{6-x}I_x$, 0≤x≤2,

and
comprises an argyrodite-type solid electrolyte, and
wherein the argyrodite-typ solid electrolyte comprises at least one selected from among $Li_6PS_5Cl$, $Li_6PS_5Br$, and $Li_6PS_5I$ and has a density of about 1.5 gram per cubic centimeter (g/cc) to about 2.0 g/cc.

14. The solid secondary battery (1) as claimed in any of claims 1 to 13, wherein the anode layer (20) comprises

an anode current collector (21), and
at least one of the cathode current collector (11) or the anode current collector (21) comprises a base film and a metal layer on at least one surface of the base film, and
wherein
the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

**15.** A method of manufacturing a solid secondary battery (1), the method comprising:

performing a first milling of $M_2S$ and an alkali metal salt;
adding an inorganic electronic-conductive structure (3) to a first-milled product and performing a second milling to obtain a composite;
preparing a cathode by utilizing a composition obtained by adding a binder to the composite and mixing the binder with the composite;
preparing an anode; and
arranging a solid electrolyte layer between the cathode and the anode.

# FIG. 1

# FIG. 2A

# FIG. 2B

# FIG. 3

<u>1</u>

11 ⎫
       ⎬ 10
12 ⎭

30

22 ⎫
       ⎬ 20
21 ⎭

# FIG. 4

<u>1</u>

11 ⎫
       ⎬ 10
12 ⎭

30

22 ⎫
23 ⎬ 20
21 ⎭

# FIG. 5

# FIG. 6

# FIG. 7

# FIG. 8

Europäisches
Patentamt

European
Patent Office

Office européen
des brevets

# EUROPEAN SEARCH REPORT

**Application Number**

EP 24 19 1615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/317337 A1 (HAYASHI AKITOSHI [JP] ET AL) 2 November 2017 (2017-11-02) * paragraphs [0066], [0071], [0073] - [0083]; example 1 * | 1,3-6,8, 10-13,15 | INV. H01M4/136 H01M4/36 H01M4/48 H01M4/58 |
| E | EP 4 481 848 A1 (SAMSUNG SDI CO LTD [KR]) 25 December 2024 (2024-12-25) * claims 1-3, 9, 10, 13, 14 * | 1,2,7-9, 11,13,14 | H01M4/62 H01M10/0525 ADD. H01M4/02 |

TECHNICAL FIELDS
SEARCHED (IPC)

H01M

The present search report has been drawn up for all claims

| Place of search | Date of completion of the search | Examiner |
|---|---|---|
| Munich | 29 January 2025 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

# EP 4 521 487 A1

## ANNEX TO THE EUROPEAN SEARCH REPORT
## ON EUROPEAN PATENT APPLICATION NO.

EP 24 19 1615

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2025

| Patent document cited in search report | | Publication date | Patent family member(s) | | Publication date |
|---|---|---|---|---|---|
| US 2017317337 | A1 | 02-11-2017 | CN 107078295 | A | 18-08-2017 |
| | | | JP 6529508 | B2 | 12-06-2019 |
| | | | JP WO2016063877 | A1 | 31-08-2017 |
| | | | KR 20170068448 | A | 19-06-2017 |
| | | | US 2017317337 | A1 | 02-11-2017 |
| | | | WO 2016063877 | A1 | 28-04-2016 |
| EP 4481848 | A1 | 25-12-2024 | EP 4481848 | A1 | 25-12-2024 |
| | | | KR 20240177778 | A | 30-12-2024 |
| | | | US 2024421298 | A1 | 19-12-2024 |
| | | | WO 2024262804 | A1 | 26-12-2024 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230107863

**Non-patent literature cited in the description**

- *Joule*, 2017, vol. 1, 563